# EUROPEAN PATENT APPLICATION

(11) **EP 4 841 695 A1**
(43) Date of publication of application: **18.11.2026**
(21) Application number: 24917402.0
(22) Date of filing: 26.07.2024
(51) Int. Cl.: H01M 4/36, H01M 4/587, H01M 4/58, H01M 10/0565, H01M 4/136, H01M 10/0585, H01M 4/38, H01M 4/40

(54) **COMPOSITE POSITIVE ELECTRODE ACTIVE MATERIAL, POSITIVE ELECTRODE COMPRISING SAME, AND ALL-SOLID-STATE SECONDARY BATTERY COMPRISING SAME**

(30) Priority: 08.01.2024 KR 20240003121
(71) Applicant: SAMSUNG SDI CO., LTD., Yongin-si, Gyeonggi-do 17084 (KR)
(72) Inventor: PARK, Tae Hyun, Yongin-Si Gyeonggi-do 17084 (KR); SON, In Hyuk, Yongin-Si Gyeonggi-do 17084 (KR); JO, Sung Nim, Yongin-Si Gyeonggi-do 17084 (KR); SHIM, Kyu Eun, Yongin-Si Gyeonggi-do 17084 (KR); LIM, Hyung Sub, Yongin-Si Gyeonggi-do 17084 (KR); LEE, Ji Eun, Yongin-Si Gyeonggi-do 17084 (KR)
(74) Representative: Maiwald GmbH
(86) International application number: PCT/KR2024/010980
(87) International publication number: WO 2025/150642

(57) **Abstract**

Provided are: a composite positive electrode active material; and a positive electrode and all-solid-state secondary battery including the same, the composite positive electrode active material including a core and a shell disposed on at least a portion of the core, wherein the core includes a composite of Li₂S, a first ionic compound, and a first carbon-based material, the shell includes an organic filler, and the organic filler includes: a second ionic compound; and a polymer, a phosphorus (P)-containing compound, or a combination thereof.

## Description

### Technical Field

The present disclosure relates to a composite positive electrode active material, and a positive electrode and all-solid-state secondary battery including the same.

### Background Art

Recently, in response to industrial demands, the development of batteries having high energy density and high safety has been actively pursued. For example, lithium batteries are used in various applications such as information devices, communication devices, and automobiles. Because automobiles are related to human life, safety is also important.

A lithium battery employing a liquid electrolyte may have an increased possibility of fire and/or explosion upon a short circuit. An all-solid-state secondary battery employing a solid electrolyte instead of a liquid electrolyte has been proposed. A solid electrolyte has a lower possibility of ignition than a liquid electrolyte.

An all-solid-state secondary battery may reduce the possibility of fire or explosion by employing a solid electrolyte instead of a liquid electrolyte. An all-solid-state battery may provide improved safety.

### Disclosure of Invention

### Technical Problem

One aspect is to provide a composite positive electrode active material having improved thermal stability and improved moisture stability by including an organic filler.

Another aspect is to provide a positive electrode including the composite positive electrode active material.

Another aspect is to provide an all-solid-state secondary battery including the positive electrode.

### Solution to Problem

According to an embodiment,
provided is a composite positive electrode active material including: a core; and a shell disposed on at least a portion of the core,
wherein the core includes a composite of Li₂S, a first ionic compound, and a first carbon-based material,
the shell includes an organic filler, and
the organic filler include:s a second ionic compound; and a polymer, a phosphorus (P)-containing compound, or a combination thereof.

According to an embodiment,
provided is a composite positive electrode active material including: a core; and a shell disposed on at least a portion of the core,
wherein the core includes a composite of Li₂S, a first ionic compound, and a first carbon-based material,
the shell includes an organic filler, and
the organic filler includes a polymer, a P-containing compound, or a combination thereof.

According to another embodiment,
provided is a positive electrode including: a positive electrode current collector; and a positive electrode active material layer disposed on one surface or opposite surfaces of the positive electrode current collector,
wherein the positive electrode active material layer includes the composite positive electrode active material described above and a solid electrolyte.

According to another embodiment,
provided is an all-solid-state secondary battery including: the positive electrode; a negative electrode; and an electrolyte layer disposed between the positive electrode and the negative electrode,
wherein the negative electrode includes a negative electrode current collector and a first negative electrode active material layer disposed on one surface of the negative electrode current collector.

### Advantageous Effects of Invention

According to one aspect, a composite positive electrode active material having improved thermal stability and moisture stability by including an organic filler may be provided.

According to another aspect, an all-solid-state secondary battery that provides improved capacity and initial efficiency by including a composite positive electrode active material having improved thermal stability and moisture stability may be provided.

### Brief Description of Drawings

FIG. 1 shows X-ray diffraction (XRD) spectra of pulverized Li₂S, a Li₂S-LiI composite which is an intermediate product of Preparation Example 1, and a Li₂S-LiI-CNF composite prepared in Preparation Example 1.
FIG. 2A is a scanning electron microscope image of Li₂S used in Preparation Example 1.
FIG. 2B is a scanning electron microscope image of a Li₂S-LiI-CNF composite prepared in Preparation Example 1.
FIG. 3 is a cross-sectional view of an all-solid-state secondary battery according to an exemplary embodiment.
FIG. 4 is a cross-sectional view of an all-solid-state secondary battery according to an exemplary embodiment.
FIG. 5 is a cross-sectional view of an all-solid-state secondary battery according to an exemplary embodiment.
FIG. 6 is a cross-sectional view of an all-solid-state secondary battery according to an exemplary embodiment.
FIG. 7 is a cross-sectional view of an all-solid-state secondary battery according to an exemplary embodiment.
FIG. 8 is a scanning electron microscope image of a side surface of a pellet prepared using a composite positive electrode active material of Example 3.
FIG. 9 is a scanning electron microscope image of a side surface of a pellet prepared using a composite positive electrode active material of Comparative Example 1.

### Best Mode for Carrying out the Invention

Unless otherwise defined, all terms (including technical and scientific terms) used in the present disclosure have the same meaning as commonly understood by one of ordinary skill in the art to which the present disclosure belongs. Furthermore, terms as defined in commonly used dictionaries should be construed as having a meaning consistent with their meaning within the context of the art and the present disclosure, and should not be construed in an idealized or overly formal sense.

Exemplary embodiments are described in the present disclosure with reference to cross-sectional views that are schematic illustrations of idealized embodiments. As such, variations from the shapes of the illustrations as a result of, for example, manufacturing techniques and/or tolerances are to be expected. Accordingly, the embodiments described in the present disclosure should not be construed as limited to the particular shapes of regions as illustrated in the present disclosure, but should include deviations in shapes that result, for example, from manufacturing. For example, a region illustrated or described as flat may typically have rough and/or nonlinear features. Moreover, an angle illustrated as sharp may be rounded. Accordingly, the regions illustrated in the drawings are schematic in nature, and their shapes are not intended to illustrate the precise shape of a region and are not intended to limit the scope of the present claims.

The present inventive concept may be embodied in many different forms and should not be construed as limited to the embodiments described in the present disclosure. The embodiments are provided so that this disclosure will be thorough and complete, and will fully convey the scope of the present inventive concept to those of ordinary skill in the art. Like reference numerals refer to like elements.

It will be understood that when an element is referred to as being "on" another element, it may be directly on the other element or intervening elements may be present therebetween. In contrast, when an element is referred to as being "directly on" another element, there are no intervening elements present therebetween.

Although the terms "first," "second," "third," and the like may be used herein to describe various elements, components, regions, layers, and/or sections, these elements, components, regions, layers, and/or sections should not be limited by these terms. These terms are only used to distinguish one element, component, region, layer, or section from another element, component, region, layer, or section. Thus, a first element, component, region, layer, or section described below could be termed a second element, component, region, layer, or section without departing from the teachings of the present disclosure.

The terminology used in the present disclosure is for the purpose of describing particular embodiments only and is not intended to limit the present inventive concept. As used herein, the singular forms are intended to include the plural forms including "at least one" unless the content clearly indicates otherwise. "At least one" should not be construed as limiting to the singular. As used in the present disclosure, the term "and/or" includes any and all combinations of one or more of the listed items. The terms "includes" and/or "including" used in the detailed description specify the presence of stated features, regions, integers, steps, operations, components, and/or constituents, but do not preclude the presence or addition of one or more other features, regions, integers, steps, operations, components, constituents, and/or groups thereof.

Spatially relative terms such as "under," "below," "lower," "above," "upper," and the like may be used herein to facilitate describing the relationship of one component or feature to another component(s) or feature(s). It will be understood that the spatially relative terms are intended to encompass different orientations of the device in use or operation in addition to the orientation depicted in the drawings. For example, if the device in the drawings is turned over, components described as "under" or "below" other components or features would then be oriented "above" the other components or features. Thus, the exemplary term "below" may encompass both orientations of above and below. The device may be otherwise oriented (rotated 90 degrees or at other orientations), and the spatially relative terms used in the present disclosure may be interpreted accordingly.

"Group" refers to a group of the Periodic Table of Elements according to the International Union of Pure and Applied Chemistry ("IUPAC") Group 1 to Group 18 classification system.

In the present disclosure, "particle diameter" refers to an average diameter when the particles are spherical, and refers to an average major axis length when the particles are non-spherical. The particle diameter may be measured using a particle size analyzer (PSA). The "particle diameter" is, for example, an average particle diameter. The "average particle diameter" is, for example, D50, which is a median particle diameter.

D50 is a particle size corresponding to a 50 % cumulative volume calculated from the particle side having a smaller particle size in a particle size distribution measured by a laser diffraction method.

D90 is a particle size corresponding to a 90 % cumulative volume calculated from the particle side having a smaller particle size in a particle size distribution measured by a laser diffraction method.

D10 is a particle size corresponding to a 10 % cumulative volume calculated from the particle side having a smaller particle size in a particle size distribution measured by a laser diffraction method.

In the present disclosure, a "weight average molecular weight" of a polymer may be measured, for example, using gel permeation chromatography (GPC), and is a relative value with respect to a polystyrene standard sample.

In the present disclosure, a "metal" includes, in an elemental state or an ionic state, both metals and metalloids such as silicon and germanium.

In the present disclosure, an "alloy" refers to a mixture of two or more metals.

In the present disclosure, an "electrode active material" refers to an electrode material capable of undergoing lithiation and delithiation.

In the present disclosure, a "positive electrode active material" refers to a positive electrode material capable of undergoing lithiation and delithiation.

In the present disclosure, a "negative electrode active material" refers to a negative electrode material capable of undergoing lithiation and delithiation.

In the present disclosure, "lithiation" and "to lithiate" refer to a process of adding lithium to an electrode active material.

In the present disclosure, "delithiation" and "to delithiate" refer to a process of removing lithium from an electrode active material.

In the present disclosure, "charge" and "to charge" refer to a process of providing electrochemical energy to a battery.

In the present disclosure, "discharge" and "to discharge" refer to a process of removing electrochemical energy from a battery.

In the present disclosure, "positive electrode" and "cathode" refer to an electrode at which electrochemical reduction and lithiation occur during a discharge process.

In the present disclosure, "negative electrode" and "anode" refer to an electrode at which electrochemical oxidation and delithiation occur during a discharge process.

In the present disclosure, an "ionic compound" is a chemical compound composed of ions held together by electrostatic forces referred to as ionic bonding.

Although specific embodiments have been described, alternatives, modifications, variations, improvements, and substantial equivalents that are not currently expected or unforeseeable may occur to applicants or those skilled in the art. Accordingly, the appended claims as filed and as may be amended are intended to encompass all such alternatives, modifications, variations, improvements, and substantial equivalents.

Hereinafter, a composite positive electrode active material according to exemplary embodiments, a positive electrode and all-solid-state secondary battery including the same are described in more detail.

### [Composite Positive Electrode Active Material]

A composite positive electrode active material according to an embodiment includes: a core; and a shell disposed on at least a portion of the core. The core may include a composite of Li₂S, a first ionic compound, and a first carbon-based material. The shell may include an organic filler. The organic filler may include: a second ionic compound; and a polymer, a phosphorus (P)-containing compound, or a combination thereof.

As Li₂S forms a composite with the first ionic compound and the first carbon-based material, the ionic conductivity and the electronic conductivity of Li₂S may be simultaneously improved. As the composite of Li₂S, the first ionic compound, and the first carbon-based material includes the first ionic compound, the ionic conductivity of the composite positive electrode active material may be improved, and the internal resistance of a positive electrode and all-solid-state secondary battery including the composite positive electrode active material may be reduced. As the composite of Li₂S, the first ionic compound, and the first carbon-based material includes the first carbon-based material, the electronic conductivity of the composite positive electrode active material may be improved, and the internal resistance of a positive electrode and all-solid-state secondary battery including the composite positive electrode active material may be reduced. As a result, the charge/discharge characteristics of an all-solid-state secondary battery including the composite positive electrode active material may be improved.

The composite of Li₂S, the first ionic compound, and the first carbon-based material may be distinguished from a simple mixture of Li₂S, the first ionic compound, and the first carbon-based material. A simple mixture of Li₂S, the first ionic compound, and the first carbon-based material fails to maintain a dense interface between Li₂S, the first ionic compound, and the first carbon-based material, thereby providing a high interfacial resistance and, as a result, may deteriorate the lifespan characteristics of an all-solid-state secondary battery.

As the core includes the composite of Li₂S, the first ionic compound, and the first carbon-based material, and the shell including the organic filler is disposed on the core, the thermal stability and moisture stability of the composite positive electrode active material may be improved. For example, the composite of Li₂S, the first ionic compound, and the first carbon-based material includes the first carbon-based material, and because the first carbon-based material having a large specific surface area contacts oxygen, the first carbon-based material may combine with oxygen to generate heat of oxidation. Ignition of the first carbon-based material may readily occur due to such heat of oxidation. As the core includes the composite of Li₂S, the first ionic compound, and the first carbon-based material and the shell including the organic filler is disposed on the core, contact between the first carbon-based material and oxygen may be blocked. Oxidation of the first carbon-based material and/or generation of heat of oxidation is suppressed. The thermal stability of the composite positive electrode active material may be improved. In addition, as the core includes the composite of Li₂S, the first ionic compound, and the first carbon-based material, and the shell including the organic filler is disposed on the core, deterioration of the core due to moisture in the atmosphere may be suppressed. The moisture stability of the composite positive electrode active material may be improved. As a result, because the composite positive electrode active material has improved thermal stability and improved moisture stability, the charge/discharge characteristics of an all-solid-state secondary battery including the composite positive electrode active material may be improved.

As the core includes the composite of Li₂S, the first ionic compound, and the first carbon-based material, and a shell including an organic filler is disposed on the core, a side reaction between the core and the solid electrolyte in the positive electrode may be effectively blocked. Deterioration of the all-solid-state secondary battery due to a side reaction between the core and the solid electrolyte may be prevented. In contrast, in an all-solid-state secondary battery in which the core is in direct contact with a solid electrolyte, for example, a sulfide-based solid electrolyte, the all-solid-state secondary battery may deteriorate due to a side reaction between the core and the solid electrolyte during charging and discharging.

The composite positive electrode active material includes a core, and the core includes a composite of Li₂S, the first ionic compound, and the first carbon-based material. The composite of Li₂S, the first ionic compound, and the first carbon-based material may include, for example, a composite represented by Li₂S-LiₐX_{b}-C (1≤a≤5, 1≤b≤5), a composite represented by Li₂S-M1ₐX_{b}-C (1≤a≤5, 1≤b≤5), a composite represented by Li₂S-M1ₐS_{b}-C (1≤a≤5, 1≤b≤5), or a combination thereof. M1 may be, for example, Mg, Ca, Sr, Ba, Al, Ga, In, V, Nb, Sc, Fe, Ru, Os, or a combination thereof. X may be, for example, I, Br, Cl, F, H, O, Se, Te, N, P, As, Sb, Al, B, OCl, PF₆, BF₄, SbF₆, AsF₆, ClO₄, AlO₂, AlCl₄, NO₃, CO₃, BH₄, SO₄, BO₃, PO₄, NCl, NCl₂, BN₂, or a combination thereof. a may be, for example, 1, 2, 3, 4, or 5. b may be, for example, 1, 2, 3, 4, or 5. C refers to a carbon-based material.

The first ionic compound may be, for example, a first lithium salt, a first metal salt, a first metal sulfide, or a combination thereof.

The first lithium salt may be, for example, a compound that does not contain sulfur (S). The first lithium salt may be, for example, a binary compound or a ternary compound. The first lithium salt may be, for example, a binary compound consisting of lithium and one element selected from Groups 13 to 17 of the Periodic Table of Elements. The lithium salt may be, for example, a ternary compound consisting of lithium and two elements selected from Groups 13 to 17 of the Periodic Table of Elements. The binary compound may include, for example, LiI, LiBr, LiCl, LiF, LiH, Li₂O, Li₂Se, Li₂Te, Li₃N, Li₃P, Li₃As, Li₃Sb, Li₃Al₂, LiB₃, or a combination thereof. As the composite positive electrode active material includes such a binary compound, the ionic conductivity of the composite positive electrode active material may be further improved. As the positive electrode includes such a composite positive electrode active material, the internal resistance of the positive electrode including the composite positive electrode active material may be further reduced. As a result, the cycle characteristics of an all-solid-state secondary battery including such a positive electrode may be further improved. The ternary compound may include, for example, Li₃OCl, LiPF₆, LiBF₄, LiSbF₆, LiAsF₆, LiClO₄, LiAlO₂, LiAlCl₄, LiNO₃, Li₂CO₃, LiBH₄, Li₂SO₄, Li₃BO₃, Li₃PO₄, Li₄NCl, Li₅NCl₂, Li₃BN₂, or a combination thereof. As the composite positive electrode active material includes such a ternary compound, the ionic conductivity of the composite positive electrode active material may be further improved. As the positive electrode includes such a composite positive electrode active material, the internal resistance of the positive electrode may be further reduced. As a result, the cycle characteristics of an all-solid-state secondary battery including such a positive electrode may be further improved.

The first metal salt is, for example, a compound that does not include lithium (Li). The first metal salt may be, for example, a compound consisting of a metal other than lithium and an element selected from Groups 13 to 17 of the Periodic Table of Elements. The first metal salt may include, for example, AlF₃, AlCl₃, AlBr₃, CaF₂, CaCl₂, CaBr₂, or a combination thereof. As the composite positive electrode active material includes such a first metal salt compound, the ionic conductivity of the composite positive electrode active material may be further improved. As the positive electrode includes such a composite positive electrode active material, the internal resistance of the positive electrode including the composite positive electrode active material may be further reduced. As a result, the cycle characteristics of an all-solid-state secondary battery including such a positive electrode may be further improved.

The first metal sulfide may be, for example, a sulfide that does not include lithium (Li). The first metal sulfide may be, for example, a compound consisting of a metal other than lithium and an element selected from Groups 13 to 17 of the Periodic Table of Elements. The first metal sulfide may include, for example, FeS, MgS, CaS, Al₂S₃, V₂S₃, FeS₂, VS₂, MnS, NiS, CuS, or a combination thereof. As the composite positive electrode active material includes such a first metal sulfide compound, the ionic conductivity of the composite positive electrode active material may be further improved. As the positive electrode includes such a composite positive electrode active material, the internal resistance of the positive electrode including the composite positive electrode active material may be further reduced. As a result, the cycle characteristics of an all-solid-state secondary battery including such a positive electrode may be further improved.

The composite of Li₂S, the first ionic compound, and the first carbon-based material may include, for example, a solid solution of Li₂S and the first ionic compound. As the composite of Li₂S, the first ionic compound, and the first carbon-based material includes a solid solution of Li₂S and the first ionic compound, the composite of Li₂S, the first ionic compound, and the first carbon-based material may have increased ionic conductivity. For example, as the solid solution of Li₂S and the first ionic compound includes lithium ions disposed within Li₂S crystallites, the ionic conductivity of the solid solution of Li₂S and the first ionic compound may be improved compared to the ionic conductivity of Li₂S. As a result, the ionic conductivity of the composite of Li₂S, the first ionic compound, and the first carbon-based material may be improved, and the internal resistance of the composite of Li₂S, the first ionic compound, and the first carbon-based material may be reduced. As the composite positive electrode active material includes such a composite, the ionic conductivity of the composite positive electrode active material may be further improved. As the positive electrode includes such a composite positive electrode active material, the internal resistance of the positive electrode having the composite positive electrode active material may be further reduced. As a result, the cycle characteristics of an all-solid-state secondary battery including such a positive electrode may be further improved.

A size of Li₂S crystallites obtained from an X-ray diffraction (XRD) spectrum of the composite of Li₂S, the first ionic compound, and the first carbon-based material may be, for example, 20 nm or less, 15 nm or less, or 10 nm or less. A size of Li₂S crystallites obtained from an XRD spectrum of the composite of Li₂S, the first ionic compound, and the first carbon-based material may be, for example, 1 to 20 nm, 1 to 15 nm, or 3 to 10 nm. As the size of the Li₂S crystallites decreases, the contact area between Li₂S and the first ionic compound may be further increased. As the contact area between Li₂S and the first ionic compound is further increased, the ionic conductivity of the composite of Li₂S and the first ionic compound may be further increased. As the composite positive electrode active material includes such a composite, the ionic conductivity of the composite positive electrode active material may be further improved. As the positive electrode includes such a composite positive electrode active material, the internal resistance of the positive electrode having the composite positive electrode active material may be further reduced. As a result, the cycle characteristics of an all-solid-state secondary battery including such a positive electrode may be further improved.

In the composite of Li₂S, the first ionic compound, and the first carbon-based material, for example, the content of Li₂S may be higher than the content of the first ionic compound. In the composite of Li₂S, the first ionic compound, and the first carbon-based material, the molar ratio of Li₂S to the first ionic compound may be, for example, 50:50 to 95:5, 55:45 to 90:10, 60:40 to 90:10, or 70:30 to 90:10. As the composite of Li₂S, the first ionic compound, and the first carbon-based material has such a molar ratio of Li₂S to the first ionic compound, improved ionic conductivity and excellent ductility may be simultaneously provided. As a result, the durability of the composite positive electrode active material including the composite of Li₂S, the first ionic compound, and the first carbon-based material may be improved. The durability of a positive electrode and an all-solid-state secondary battery including the composite positive electrode active material may be improved. When the molar ratio of Li₂S is excessively high, the effect of improving ionic conductivity by the lithium salt may be insignificant. When the molar ratio of Li₂S is excessively low, the energy density of a secondary battery including the composite positive electrode active material may be reduced.

The composite of Li₂S, the first ionic compound, and the first carbon-based material includes Li₂S. Li₂S has a high theoretical capacity, and thus an all-solid-state secondary battery having a high energy density may be provided. Li₂S has low ionic conductivity and/or electronic conductivity, and thus a composite is formed with the first ionic compound and the first carbon-based material to overcome these disadvantages. In the composite of Li₂S, the first ionic compound, and the first carbon-based material, the content of Li₂S may be, for example, 30 to 95 wt%, 50 to 95 wt%, 50 to 90 wt%, 50 to 80 wt% or 50 to 70 wt%, based on the total weight of the composite of Li₂S, the first ionic compound, and the first carbon-based material. Alternatively, in the composite of Li₂S, the first ionic compound, and the first carbon-based material, the content of Li₂S may be, for example, 10 to 95 wt%, 10 to 80 wt%, 20 to 70 wt%, 30 to 60 wt%, or 40 to 60 wt%, based on the total weight of the composite of Li₂S, the first ionic compound, and the first carbon-based material. As the composite of Li₂S, the first ionic compound, and the first carbon-based material has the Li₂S content within these ranges, improved ionic conductivity and excellent ductility may be simultaneously provided. As a result, the durability of a composite positive electrode active material including the composite of Li₂S, the first ionic compound, and the first carbon-based material, as well as a positive electrode and an all-solid-state secondary battery including the same, may be improved. When the content of Li₂S is excessively increased, improvement of the ionic conductivity and/or electronic conductivity of Li₂S may not be easily achieved. When the content of Li₂S is excessively low, the energy density of the secondary battery may be reduced.

In the composite of Li₂S, the first ionic compound, and the first carbon-based material, the content of the first ionic compound may be, for example, 1 to 50 wt%, 5 to 50 wt%, 10 to 50 wt%, 20 to 50 wt%, or 30 to 50 wt% based on the total weight of the composite of Li₂S, the first ionic compound, and the first carbon-based material. As the composite of Li₂S, the first ionic compound, and the first carbon-based material has the first ionic compound content within these ranges, improved ionic conductivity and excellent ductility may be simultaneously provided. As a result, the durability of a solid electrolyte separator including the composite of Li₂S, the first ionic compound, and the first carbon-based material may be improved.

In the composite of Li₂S, the first ionic compound, and the first carbon-based material, the content of the first carbon-based material may be, for example, 1 to 20 wt%, 5 to 20 wt%, or 10 to 20 wt% based on the total weight of the composite of Li₂S, the first ionic compound, and the first carbon-based material. When the content of the first carbon-based material increases excessively, the energy density of an all-solid-state secondary battery may decrease. When the content of the first carbon-based material decreases excessively, the electronic conductivity of the composite of Li₂S, the first ionic compound, and the first carbon-based material may decrease, and thus the internal resistance of a composite positive electrode active material may increase. As a result, the cycle characteristics of an all-solid-state secondary battery may deteriorate.

Based on 100 parts by weight of the composite of Li₂S, the first ionic compound, and the first carbon-based material, the composite may include, for example, 10 to 80 parts by weight of Li₂S, 1 to 40 parts by weight of the first ionic compound, and 1 to 20 parts by weight of the first carbon-based material. The content of Li₂S included in the composite of Li₂S, the first ionic compound, and the first carbon-based material may be, for example, 10 to 80 parts by weight, 20 to 70 parts by weight, 30 to 60 parts by weight, or 40 to 60 parts by weight of Li₂S, based on 100 parts by weight of the composite of Li₂S, the first ionic compound, and the first carbon-based material. The content of the first ionic compound included in the composite of Li₂S, the first ionic compound, and the first carbon-based material may be, for example, 1 to 40 parts by weight, 5 to 40 parts by weight, 10 to 40 parts by weight, 15 to 40 parts by weight, 20 to 40 parts by weight, or 25 to 35 parts by weight of the first ionic compound, based on 100 parts by weight of the composite of Li₂S, the first ionic compound, and the first carbon-based material. The content of the first carbon-based material included in the composite of Li₂S, the first ionic compound, and the first carbon-based material may be, for example, 1 to 20 parts by weight, 5 to 20 parts by weight, or 10 to 20 parts by weight of the carbon-based material, based on 100 parts by weight of the composite of Li₂S, the first ionic compound, and the first carbon-based material. As the composite of Li₂S, the first ionic compound, and the first carbon-based material has compositions of Li₂S, the first ionic compound, and the first carbon-based material within these ranges, a composite positive electrode active material including the composite of Li₂S, the first ionic compound, and the first carbon-based material may provide excellent ionic conductivity and/or electronic conductivity.

The size of the composite of Li₂S, the first ionic compound, and the first carbon-based material may be, for example, 1 to 20 µm, 1 to 15 µm, 1 to 10 µm, 2 to 10 µm, or 3 to 10 µm. As the composite of Li₂S, the first ionic compound, and the first carbon-based material has a size within these ranges, improved ionic conductivity and electronic conductivity may be simultaneously provided. When the size of the composite of Li₂S, the first ionic compound, and the first carbon-based material is too small, the carbon-based material may be pulverized, making it difficult to secure a conductive path between the composite positive electrode active material particles. When the size of the composite of Li₂S, the first ionic compound, and the first carbon-based material is too large, the degree of compositing may be lowered. It may be difficult to secure an electronically conductive path and an ionically conductive path inside the composite of Li₂S, the first ionic compound, and the first carbon-based material. The size of the composite of Li₂S, the first ionic compound, and the first carbon-based material may be, for example, a D50 particle diameter. The size of the composite of Li₂S, the first ionic compound, and the first carbon-based material may be measured, for example, using a particle size analyzer (PSA) using a laser. The size of the composite of Li₂S, the first ionic compound, and the first carbon-based material may be calculated, for example, by software from a scanning electron microscope image of the composite powder.

The D10 particle diameter of the composite of Li₂S, the first ionic compound, and the first carbon-based material may be, for example, 1 µm or more, 1.2 µm or more, 1.5 µm or more, or 2 µm or more. As the D10 particle diameter of the composite of Li₂S, the first ionic compound, and the first carbon-based material has such a range, the fine particle content of the composite of Li₂S, the first ionic compound, and the first carbon-based material may be reduced. As the fine particle content of the composite of Li₂S, the first ionic compound, and the first carbon-based material is reduced, the compactness of the positive electrode including the composite positive electrode active material is increased, so that the energy density of an all-solid-state secondary battery including the positive electrode may be improved. As the fine particle content of the composite of Li₂S, the first ionic compound, and the first carbon-based material is increased, the interfacial resistance between particles of the composite of Li₂S, the first ionic compound, and the first carbon-based material increases, and it may become difficult to form a conductive network. As a result, the cycle characteristics of an all-solid-state secondary battery including the composite of Li₂S, the first ionic compound, and the first carbon-based material may be deteriorated. The D10 particle diameter may be measured, for example, using a particle size analyzer (PSA) using a laser.

The size of the Li₂S particles included in the composite of Li₂S, the first ionic compound, and the first carbon-based material may be, for example, 2 µm or less, 1.5 µm or less, or 1 µm or less. The size of the Li₂S particles included in the composite of Li₂S, the first ionic compound, and the first carbon-based material may be, for example, 0.1 to 2 µm, 0.1 to 1.5 µm, or 0.1 to 1 µm. As the volume change during charge and discharge is suppressed by the Li₂S particles having a size within this range, the deterioration of the composite positive electrode active material including the composite of Li₂S, the first ionic compound, and the first carbon-based material during charge and discharge may be suppressed. When the size of the Li₂S particles is excessively increased, the volume change of the composite of Li₂S, the first ionic compound, and the first carbon-based material during charging and discharging is increased, so that the deterioration of the composite positive electrode active material including the composite may be accelerated. As a result, the cycle characteristics of an all-solid-state secondary battery including such a composite positive electrode active material may be deteriorated. The size of the Li₂S particles included in the composite of Li₂S, the first ionic compound, and the first carbon-based material may be measured, for example, using a scanning electron microscope, a transmission electron microscope, or the like.

The composite of Li₂S, the first ionic compound, and the first carbon-based material includes the first carbon-based material. The first carbon-based material may be, for example, any material including carbon atoms that is used as a conductive material in the art.

The first carbon-based material may include, for example, amorphous carbon, crystalline carbon, or a combination thereof. As the first carbon-based material includes amorphous carbon, a side reaction between the first carbon-based material and a solid electrolyte may be suppressed. Therefore, the cycle characteristics of an all-solid-state secondary battery including the composite of Li₂S, the first ionic compound, and the first carbon-based material may be further improved. The first carbon-based material may be, for example, a calcined product of a carbon precursor.

The first carbon-based material may include, for example, a carbon nanostructure. The carbon nanostructure may include, for example, a one-dimensional carbon nanostructure, a two-dimensional carbon nanostructure, a three-dimensional carbon nanostructure, or a combination thereof. The carbon nanostructure may be, for example, a carbon nanofiber, a carbon nanotube, a carbon nanobelt, a carbon nanorod, graphene, or a combination thereof.

The first carbon-based material may include, for example, a porous carbon-based material or a non-porous carbon-based material. The porous carbon-based material may include, for example, periodic and regular two-dimensional or three-dimensional pores. Alternatively, the porous carbon-based material may include, for example, aperiodic and irregular two-dimensional or three-dimensional pores.

The first carbon-based material may include, for example, a fibrous carbon-based material, a particulate carbon-based material, or a combination thereof.

The first carbon-based material may include, for example, a fibrous carbon-based material. As the composite of Li₂S, the first ionic compound, and the first carbon-based material includes a fibrous carbon-based material, the electronic conductivity of the composite of Li₂S, the first ionic compound, and the first carbon-based material may be further improved. As the composite of Li₂S, the first ionic compound, and the first carbon-based material includes a fibrous carbon-based material, electronic conduction from a surface to an interior of the composite of Li₂S, the first ionic compound, and the first carbon-based material may be more readily carried out. An internal resistance of the composite positive electrode active material including the composite of Li₂S, the first ionic compound, and the first carbon-based material may be reduced. As a result, cycle characteristics of an all-solid-state secondary battery including the composite positive electrode active material may be further improved. An aspect ratio of the fibrous carbon-based material may be, for example, 5 or more, 10 or more, or 20 or more. An aspect ratio of the fibrous carbon-based material may be, for example, 3 to 30, 4 to 30, 5 to 30, 10 to 30, or 20 to 30. An aspect ratio of the fibrous carbon-based material may be, for example, 5 to 30, 5 to 20, or 5 to 10. As the fibrous carbon-based material has an aspect ratio within such a range, an overall electronic conductivity of the composite is improved, and a local imbalance of electronic conductivity within the composite may be further alleviated. The fibrous carbon-based material may include, for example, a carbon nanostructure. The carbon nanostructure may include, for example, a carbon nanofiber (CNF), a carbon nanotube (CNT), a carbon nanobelt, a carbon nanorod, or a combination thereof. The carbon nanostructure may form a primary carbon nanostructure consisting of a single carbon nanostructure and a secondary carbon nanostructure in which a plurality of carbon nanostructures are agglomerated. An aspect ratio of the fibrous carbon-based material may be measured, for example, from a scanning electron microscope (SEM) image or a transmission electron microscope (TEM) image.

A diameter of the primary carbon nanostructure may be, for example, 1 nm to 200 nm, 1 nm to 150 nm, 1 nm to 100 nm, 1 nm to 50 nm, 1 nm to 30 nm, or 1 nm to 20 nm. A length of the primary carbon nanostructure may be, for example, 10 nm to 2 µm, 10 nm to 1.5 µm, 10 nm to 1 µm, 10 nm to 500 nm, 10 nm to 400 nm, 10 nm to 300 nm, 10 nm to 200 nm, or 10 nm to 100 nm. A diameter and a length of the primary carbon nanostructure may be measured from a scanning electron microscope (SEM) image or a transmission electron microscope (TEM) image. Alternatively, a diameter and/or a length of the primary carbon nanostructure may be measured by a laser diffraction method.

A secondary carbon nanostructure is, for example, a structure formed by aggregating the primary carbon nanostructures such that they wholly or partially form a bundle type or rope type. The secondary carbon nanostructure may include, for example, a bundle-type carbon nanostructure, a rope-type carbon nanostructure, or a combination thereof. A diameter of the secondary carbon nanostructure may be, for example, 2 nm to 200 nm, 3 nm to 150 nm, 5 nm to 100 nm, 5 nm to 50 nm, 5 nm to 30 nm, or 5 nm to 20 nm. A length of the secondary carbon nanotube structure may be, for example, 20 nm to 2 µm, 30 nm to 1.5 µm, 50 nm to 1 µm, 50 nm to 500 nm, 50 nm to 400 nm, 50 nm to 300 nm, 50 nm to 200 nm, or 50 nm to 100 nm. A diameter and a length of the secondary carbon nanostructure may be measured from a scanning electron microscope (SEM) image or an optical microscope. Alternatively, a diameter and/or a length of the secondary carbon nanostructure may be measured by a laser diffraction method. The secondary carbon nanostructures may be used in manufacturing the composite after being converted into primary carbon nanostructures by dispersing them in a solvent or the like, for example.

The first carbon-based material may include, for example, a particulate carbon-based material. The particulate carbon-based material may include, for example, carbon black such as Ketjen black, acetylene black, Denka black, thermal black, or channel black; graphite, activated carbon, or a combination thereof. An aspect ratio of the particulate carbon-based material may be, for example, 4 or less, 3 or less, or 2 or less. An aspect ratio of the fibrous carbon-based material may be, for example, 1 to 4, 1 to 3, or 1 to 2.

The composite positive electrode active material may have a core/shell structure, and the shell may include an organic filler. The organic filler may include a second ionic compound; and a polymer, a phosphorus (P)-containing compound, or a combination thereof. As the shell includes the organic filler, thermal stability and moisture stability of the composite positive electrode active material may be improved. As the organic filler includes the second ionic compound, the organic filler may have ionic conductivity. As the organic filler has ionic conductivity, an increase in internal resistance of the positive electrode and the all-solid-state secondary battery due to introduction of the organic filler may be suppressed. As the organic filler includes a polymer, a phosphorus (P)-containing compound, or a combination thereof, contact between the core and moisture/air, etc. may be effectively suppressed. Ignition of the core and/or degradation of the core due to moisture may be effectively suppressed. As a result, thermal stability and/or moisture stability of the composite positive electrode active material may be improved. As the organic filler has a lower elastic modulus than the core, a volume change of the core during charging and discharging may be more effectively accommodated.

The second ionic compound may include, for example, a second lithium salt, an ionic liquid, or a combination thereof.

The second lithium salt may be any lithium salt usable in the art. The second lithium salt may include, for example, LiPF₆, LiBF₄, LiSbF₆, LiAsF₆, LiClO₄, LiCF₃SO₃, Li(CF₃SO₂)₂N, LiC₄F₉SO₃, LiAlO₂, LiAlCl₄, LiN(CₓF₂ₓ₊₁SO₂)(C_{y}F_{2y+1}SO₂) (where 1≤x≤20 and 1≤y≤20), LiCl, LiI, LiBr, LiF, or a mixture thereof.

An ionic liquid refers to a salt in a liquid state at room temperature or a roomtemperature molten salt that has a melting point equal to or below room temperature and is composed of ions alone. The ionic liquid may be any ionic liquid usable in the art. The ionic liquid may include, for example, at least one selected from compounds including: a) one or more cations selected from ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, triazolium-based, and mixtures thereof; and b) one or more anions selected from BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br⁻, I⁻, BF₄⁻, SO₄⁻, CF₃SO₃⁻, (FSO₂)₂N⁻, (C₂F₅SO₂)₂N⁻, (C₂F₅SO₂)(CF₃SO₂)N⁻, and (CF₃SO₂)₂N⁻.

A content of the second ionic compound may be, for example, 1 to 50 parts by weight, 1 to 40 parts by weight, 1 to 30 parts by weight, 1 to 20 parts by weight, or 1 to 10 parts by weight, based on 100 parts by weight of the organic filler. As the organic filler includes the second ionic compound within these ranges, charge and discharge characteristics of an all-solid-state secondary battery including the composite positive electrode active material including the organic filler may be further improved.

The polymer may comprise, for example, polyethylene oxide (PEO), polyvinylidene fluoride (PVDF), vinylidene fluoride-hexafluoropropylene (PVDF-HFP), poly(styrene-b-ethylene oxide) block copolymer (PS-PEO), poly(styrene-butadiene), poly(styrene-isoprene-styrene), poly(styrene-b-divinylbenzene) block copolymer, poly(styrene-ethylene oxide-styrene) block copolymer, polyvinyl fluoride (PVF), poly(methyl methacrylate) (PMMA), polyethylene glycol (PEG), polyacrylonitrile (PAN), polytetrafluoroethylene (PTFE), polyethylenedioxythiophene (PEDOT), polypyrrole (PPY), polyaniline, polyacetylene, Nafion, Aquivion, Flemion, Gore, Aciplex, Morgane ADP, sulfonated poly(ether ether ketone) (SPEEK), sulfonated poly(arylene ether ketone ketone sulfone) (SPAEKKS), sulfonated poly(aryl ether ketone) (SPAEK), poly[bis(benzimidazobenzisoquinolinones)] (SPBIBI), poly(styrene sulfonate) (PSS), lithium 9,10-diphenylanthracene-2-sulfonate (DPASLi⁺), or a combination thereof, but is not limited thereto, and any polymer used in the technical field capable of suppressing diffusion of oxygen and/or moisture may be used.

The phosphorus (P)-containing compound may include, for example, a phosphate-based compound, a phosphite based compound, or a combination thereof.

The phosphate-based compound may be represented, for example, by Formula 1 below.

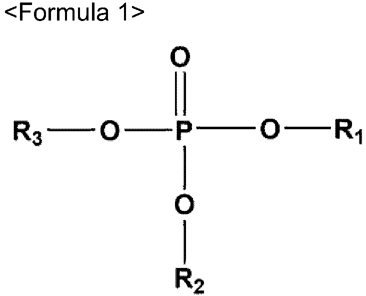

In the formula,
R₁, R₂, and R₃ may each independently be: a hydrogen atom; a fluorine atom; a C1-C5 alkyl group unsubstituted or substituted with halogen; a C4-C10 cycloalkyl group unsubstituted or substituted with halogen; a C5-C10 aryl group unsubstituted or substituted with halogen; a C2-C10 heteroaryl group unsubstituted or substituted with halogen; or a C2-C10 alkenyl group unsubstituted or substituted with halogen.

The phosphite based compound may be represented, for example, by Formula 2 below.

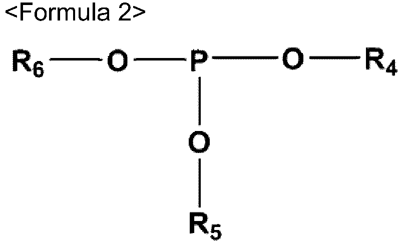

In the formula,
R₄, R₅, and R₆ may each independently be: a hydrogen atom; a fluorine atom; a C1-C5 alkyl group unsubstituted or substituted with halogen; a C4-C10 cycloalkyl group unsubstituted or substituted with halogen; a C5-C10 aryl group unsubstituted or substituted with halogen; a C2-C10 heteroaryl group unsubstituted or substituted with halogen; or a C2-C10 alkenyl group unsubstituted or substituted with halogen.

The phosphate-based compound may include, for example, trimethyl phosphate, triethyl phosphate, triphenyl phosphate, tris(2,2,2-trifluoroethyl)phosphate, or a combination thereof.

The phosphite-based compound may include, for example, trimethyl phosphite, triethyl phosphite, triphenyl phosphite, tris(2,2,2-trifluoroethyl)phosphite, or a combination thereof.

The organic filler may include, for example, a phosphorus (P)-containing compound while not including the second ionic compound.

The organic filler may be free of an organic solvent. The organic filler may not include an intentionally added organic solvent. The organic filler does not include an organic solvent, and thus unnecessary gas generation and the like during charging and discharging of the all-solid-state secondary battery may be prevented, whereby the high-temperature stability of the all-solid-state secondary battery may be further improved.

The organic filler may include, for example, an organic electrolyte. The organic filler may include, for example, a polymer electrolyte, an electrolyte including a phosphorus (P)-containing compound, or a combination thereof.

The polymer electrolyte may include, for example, a polymer solid electrolyte, a polymer gel electrolyte, or a combination thereof.

The polymer solid electrolyte may include, for example, a mixture of a second lithium salt and a polymer, or may include a polymer having an ion-conductive functional group. The polymer solid electrolyte may be, for example, a polymer electrolyte that is in a solid state at 25 °C and 1 atm. The polymer solid electrolyte may not include, for example, a liquid. The polymer solid electrolyte may include, for example, the polymer described above. The polymer included in the polymer solid electrolyte may be, for example, a compound including 10 or more, 20 or more, 50 or more, or 100 or more repeating units. The weight average molecular weight of the polymer included in the polymer solid electrolyte may be, for example, 1,000 Dalton to 3,000,000 Dalton, 10,000 Dalton to 3,000,000 Dalton, 100,000 Dalton to 3,000,000 Dalton, or 1,000,000 Dalton to 3,000,000 Dalton.

The polymer gel electrolyte may include, for example, a liquid electrolyte and a polymer, or may include an organic solvent and a polymer having an ion-conductive functional group. The polymer gel electrolyte may be, for example, a polymer electrolyte that is in a gel state at 25 °C and 1 atm. The polymer gel electrolyte may have a gel state without including a liquid, for example. The liquid electrolyte used in the polymer gel electrolyte may be, for example, a mixture of an ionic liquid, a second lithium salt, and an organic solvent; a mixture of a second lithium salt and an organic solvent; a mixture of an ionic liquid and an organic solvent; or a mixture of a second lithium salt and an ionic liquid. The organic solvent used in the polymer gel electrolyte may be selected from among the organic solvents used in the liquid electrolyte. The polymer used in the polymer gel electrolyte may be selected from among the polymers used in the polymer solid electrolyte. The polymer solid electrolyte may form a polymer gel electrolyte, for example, by being impregnated with a liquid electrolyte within a secondary battery. The polymer gel electrolyte may further include inorganic particles. The polymer included in the polymer gel electrolyte may be, for example, a compound including 10 or more, 20 or more, 50 or more, or 100 or more repeating units. The weight average molecular weight of the polymer included in the polymer gel electrolyte may be, for example, 1,000 Dalton to 3,000,000 Dalton, 10,000 Dalton to 3,000,000 Dalton, 100,000 Dalton to 3,000,000 Dalton, or 1,000,000 Dalton to 3,000,000 Dalton.

The content of the organic filler may be, for example, 1 to 20 wt%, 2 to 18 wt%, 3 to 17 wt%, or 5 to 15 wt% of the total weight of the composite positive electrode active material. By having the composite positive electrode active material including the organic filler within such a range, the oxidation resistance and/or moisture stability of the composite positive electrode active material may be further improved. Accordingly, the charge-discharge characteristics of an all-solid-state secondary battery including the composite positive electrode active material may be further improved.

The composite positive electrode active material includes a core and a shell disposed on the core. The thickness of the shell may be, for example, 2 µm or less, 1.5 µm or less, 1 µm or less, 800 nm or less, or 500 nm or less. The thickness of the shell may be, for example, 10 nm to 2 µm, 50 nm to 1.5 µm, 100 nm to 1 µm, 100 nm to 800 nm, or 100 nm to 500 nm. The thickness of the shell may be, for example, 50 % or less, 40 % or less, 30 % or less, 20 % or less, 10 % or less, or 5 % or less of the particle diameter of the core. When the composite positive electrode active material has the shell thickness within these ranges, the oxidation resistance and/or moisture stability of the composite positive electrode active material may be further improved. When the shell thickness is excessively small, it may be difficult to provide the required effects. When the shell thickness is excessively large, the energy density of the composite positive electrode active material may decrease. The thickness of the shell may be measured, for example, by scanning electron microscopy, transmission electron microscopy, or the like, of a cross-section of the composite positive electrode active material.

The composite positive electrode active material may have an ionic conductivity of 0.03 mS/cm or more, 0.04 mS/cm or more, 0.05 mS/cm or more, or 0.06 mS/cm or more after 72 hours in air at 25 °C and 1 atmosphere. The composite positive electrode active material may have an ionic conductivity of 0.03 to 1 mS/cm, 0.04 to 1 mS/cm, 0.05 to 1 mS/cm, or 0.06 to 1 mS/cm after 72 hours in air at 25 °C and 1 atmosphere. Because the composite positive electrode active material has improved moisture stability, deterioration of the composite positive electrode active material caused by moisture in the air may be suppressed during the manufacturing process of an all-solid-state secondary battery, and excellent ionic conductivity may be provided.

The composite positive electrode active material may not ignite during sieving in air at 25 °C and 1 atmosphere. The sieving time may be, for example, 72 hours or less, 48 hours or less, 24 hours or less, 12 hours or less, or 1 hour or less. Because the composite positive electrode active material includes a core and a shell on the core, the shell including an organic filler, the organic filler may effectively prevent frictional heat between core particles and/or oxidation heat caused by a reaction between the core and oxygen. Accordingly, ignition during the sieving process of the composite positive electrode active material may be effectively suppressed. The composite positive electrode active material may have improved thermal stability. Because the composite positive electrode active material has improved thermal stability, the thermal stability and/or high-temperature stability of an all-solid-state secondary battery including the composite positive electrode active material may be improved.

### [Positive electrode]

A positive electrode according to an embodiment includes: a positive electrode current collector; and a positive electrode active material layer disposed on one surface or opposite surfaces of the positive electrode current collector. The positive electrode active material layer may include the composite positive electrode active material and a solid electrolyte described above. Because the positive electrode includes the composite positive electrode active material and the solid electrolyte, the positive electrode may have further reduced internal resistance. Accordingly, the cycle characteristics of a secondary battery including the positive electrode may be further improved.

### [Positive electrode: Composite Positive electrode Active Material]

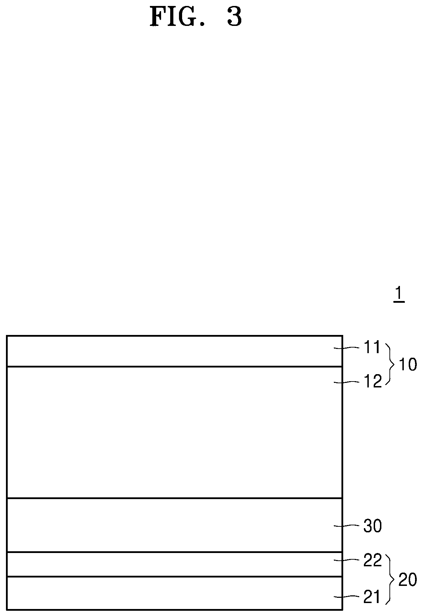

Referring to FIGS. 3 to 7, the positive electrode 10 includes a positive electrode current collector 11; and a positive electrode active material layer 12 disposed on one surface or opposite surfaces of the positive electrode current collector 11. The positive electrode active material layer 12 includes the composite positive electrode active material and the solid electrolyte described above.

Based on 100 parts by weight of the positive electrode active material layer 12, the composite positive electrode active material may be included in an amount of 40 to 90 parts by weight, 40 to 80 parts by weight, 50 to 80 parts by weight, or 50 to 70 parts by weight. When the content of the composite positive electrode active material is excessively reduced, the energy density of a secondary battery is decreased. When the content of the composite positive electrode active material is excessively increased, deterioration of the positive electrode may be accelerated due to a volume change of the positive electrode during charging and discharging. As a result, the cycle characteristics of the all-solid-state secondary battery 1 may be deteriorated.

### [Positive electrode: Solid Electrolyte]

The positive electrode active material layer 12 may include, for example, a solid electrolyte. The solid electrolyte may be, for example, a sulfide-based solid electrolyte. The solid electrolyte included in the positive electrode 10 may be the same as or different from the solid electrolyte included in the electrolyte layer 30. For details regarding the solid electrolyte, reference is made to the section on the electrolyte layer 30.

The solid electrolyte included in the positive electrode active material layer 12 may have a smaller D50 average particle diameter than the solid electrolyte included in the electrolyte layer 30. For example, the D50 average particle diameter of the solid electrolyte included in the positive electrode active material layer 12 may be 90 % or less, 80 % or less, 70 % or less, 60 % or less, 50 % or less, 40 % or less, 30 % or less, or 20 % or less of the D50 average particle diameter of the solid electrolyte included in the electrolyte layer 30. The D50 average particle diameter may be, for example, a median particle diameter (D50). The median particle diameter (D50) is, for example, a particle size corresponding to a 50 % cumulative volume calculated from the side of particles having a smaller particle size in the particle size distribution measured by a laser diffraction method.

Based on 100 parts by weight of the positive electrode active material layer 12, the solid electrolyte may be included in an amount of 10 to 60 parts by weight, 10 to 50 parts by weight, 20 to 50 parts by weight, or 30 to 50 parts by weight. When the content of the solid electrolyte is excessively reduced, the internal resistance of the positive electrode increases, whereby the cycle characteristics of the secondary battery may deteriorate. When the content of the sulfide-based solid electrolyte is excessively increased, the energy density of the secondary battery 1 may be reduced.

### [Positive electrode: Conductive Material]

The positive electrode active material layer 12 may further include a conductive material. The conductive material may be, for example, a carbon-based conductive material, a metal-based conductive material, or a combination thereof. The carbon-based conductive material may be, for example, graphite, carbon black, acetylene black, Ketjen black, carbon fibers, or a combination thereof, but is not limited thereto, and any material used as a carbon-based conductive material in the art may be used. The metal-based conductive material may be a metal powder, a metal fiber, or a combination thereof, but is not limited thereto, and any material used as a metal-based conductive material in the art may be used. The content of the conductive material included in the positive electrode active material layer 12 may be, for example, 1 wt% to 30 wt%, 1 wt% to 20 wt%, or 1 wt% to 10 wt% of the total weight of the positive electrode active material layer 12.

The positive electrode active material layer 12 may further include a second carbon-based material as a conductive material. The second carbon-based material may include, for example, a fibrous carbon-based material. The aspect ratio of the fibrous carbon-based material may be, for example, 5 or more, 10 or more, or 20 or more.

The fibrous carbon-based material may include, for example, a fibrous carbon nanostructure. The fibrous carbon nanostructure may include, for example, carbon nanofibers, carbon nanotubes, carbon nanobelts, carbon nanorods, or a combination thereof. The second carbon-based material is distinguished from the first carbon-based material constituting a portion of the composite positive electrode active material in that the second carbon-based material is simply mixed with the composite positive electrode active material.

The positive electrode active material layer 12 may not further include the second carbon-based material. In the positive electrode active material layer 12, the carbon-based material may be disposed only in the composite positive electrode active material. The positive electrode active material layer 12 may not additionally include a separate second carbon-based material in addition to the composite positive electrode active material having the first carbon-based material. As the positive electrode active material layer does not additionally include the second carbon-based material, the energy density of the positive electrode and the secondary battery 1 may be improved, and the manufacturing process may be simplified.

### [Positive Electrode: Binder]

The positive electrode active material layer 12 may further include a binder. The binder may be, for example, styrene butadiene rubber (SBR), polytetrafluoroethylene, polyvinylidene fluoride, polyethylene, or the like, but is not limited thereto, and any material used as a binder in the art may be used. The content of the binder included in the positive electrode active material layer 12 may be, for example, 0.1 wt% to 10 wt%, 0.5 to 5 wt%, or 0.5 to 2 wt% of a total weight of the positive electrode active material layer 12. The binder may be omitted.

### [Positive Electrode: Other Additives]

The positive electrode active material layer 12 may further include additives such as, for example, a filler, a coating agent, a dispersant, and an ion conductive aid, in addition to the positive electrode active material, the solid electrolyte, the binder, and the conductive material described above.

As the filler, coating agent, dispersant, ion conductive aid, and the like that may be included in the positive electrode active material layer 12, any known material generally used in an electrode of an all-solid-state secondary battery may be used.

### [Positive Electrode: Positive Electrode Current Collector]

For the positive electrode current collector 11, for example, a plate or foil made of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof is used. The positive electrode current collector 11 may be omitted. A thickness of the positive electrode current collector 11 may be, for example, 1 µm to 100 µm, 1 µm to 50 µm, 5 µm to 25 µm, or 10 µm to 20 µm.

The positive electrode current collector 11 may include, for example, a base film and a metal layer disposed on one surface or opposite surfaces of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The base film may be, for example, an insulator. Because the base film includes an insulating thermoplastic polymer, a rapid increase in current resulting from softening or liquefaction of the base film to interrupt the battery operation upon occurrence of a short circuit may be suppressed. The metal layer may include, for example, indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof. The metal layer may act as an electrochemical fuse and may be cut off in the event of an overcurrent to perform a short-circuit prevention function. By adjusting a thickness of the metal layer, a limiting current and a maximum current may be controlled. The metal layer may be plated or deposited on the base film. As the thickness of the metal layer decreases, a limiting current and/or a maximum current of the positive electrode current collector 11 decreases, and thus stability of a lithium battery during a short circuit may be improved. A lead tab may be added on the metal layer for connection to the outside. The lead tab may be welded to the metal layer or to the metal layer/base film stack by ultrasonic welding, laser welding, spot welding, or the like. During welding, the base film and/or the metal layer may melt such that the metal layer is electrically connected to the lead tab. To make the welding between the metal layer and the lead tab more robust, a metal chip may be added between the metal layer and the lead tab. The metal chip may be a thin piece of the same material as the metal of the metal layer. The metal chip may be, for example, a metal foil, a metal mesh, or the like. The metal chip may be, for example, an aluminum foil, a copper foil, a SUS foil, or the like. By disposing the metal chip on the metal layer and then welding it to the lead tab, the lead tab may be welded to a metal chip/metal layer stack or to a metal chip/metal layer/base film stack. During welding, the base film, the metal layer, and/or the metal chip may melt such that the metal layer or a metal layer/metal chip stack is electrically connected to the lead tab. A metal chip and/or a lead tab may be added on a portion of the metal layer. A thickness of the base film may be, for example, 1 to 50 µm, 1.5 to 50 µm, 1.5 to 40 µm, or 1 to 30 µm. As the base film has a thickness within such a range, a weight of an electrode assembly may be more effectively reduced. A melting point of the base film may be, for example, 100 to 300 °C, 100 to 250 °C or less, or 100 to 200 °C. As the base film has a melting point within such a range, the base film may be melted and easily bonded to a lead tab during a process of welding the lead tab. To improve adhesion between the base film and a metal layer, a surface treatment such as a corona treatment may be performed on the base film. A thickness of the metal layer may be, for example, 0.01 to 3 µm, 0.1 to 3 µm, 0.1 to 2 µm, or 0.1 to 1 µm. As the metal layer has a thickness within such a range, stability of an electrode assembly may be secured while maintaining conductivity. A thickness of the metal chip may be, for example, 2 to 10 µm, 2 to 7 µm, or 4 to 6 µm. As the metal chip has a thickness within such a range, connection between the metal layer and the lead tab may be more easily performed. As the positive electrode current collector 11 has such a structure, a weight of a positive electrode may be reduced, and as a result, an energy density of the positive electrode and a lithium battery may be improved.

### [Positive electrode: inactive member]

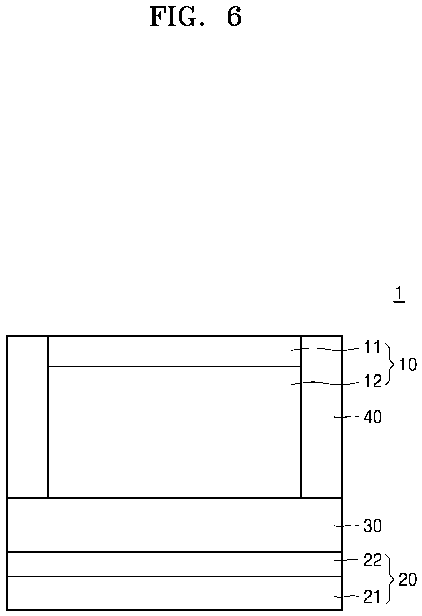

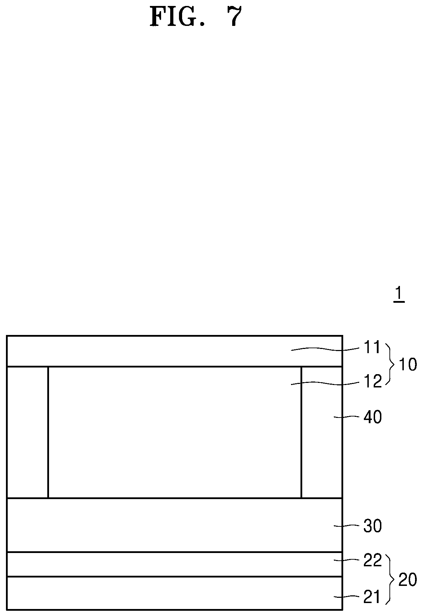

Referring to FIGS. 6 to 7, the positive electrode 10 may include a positive electrode current collector 11 and a positive electrode active material layer 12 disposed on one surface of the positive electrode current collector. An inactive member 40 is disposed on one side surface of the positive electrode 10. Referring to FIG. 6, the inactive member 40 may be disposed on one side surface of the positive electrode active material layer 12 and the positive electrode current collector 11. Referring to FIG. 7, the inactive member 40 is disposed on one side surface of the positive electrode active material layer 12 and is disposed between the electrolyte layer 30 and the positive electrode current collector 11 facing the electrolyte layer 30. The inactive member 40 is not disposed on one side surface of the positive electrode current collector 11. The electrolyte layer 30 may be, for example, a solid electrolyte layer.

By including the inactive member 40, cracking of the electrolyte layer 30 during manufacturing and/or charging and discharging of the all-solid-state secondary battery 1 is prevented, and as a result, cycle characteristics of the all-solid-state secondary battery 1 are improved. In the all-solid-state secondary battery 1 that does not include the inactive member 40, during manufacturing and/or charging and discharging of the all-solid-state secondary battery 1, a non-uniform pressure is applied to the electrolyte layer 30 that is in contact with the positive electrode 10, thereby causing cracks in the electrolyte layer 30, and the likelihood of a short circuit occurring due to growth of lithium metal therethrough increases.

In the all-solid-state secondary battery 1, a thickness of the inactive member 40 is greater than or equal to a thickness of the positive electrode active material layer 12. Alternatively, in the all-solid-state secondary battery 1, a thickness of the inactive member 40 may be substantially equal to a thickness of the positive electrode 10. As the thickness of the inactive member 40 is equal to the thickness of the positive electrode 10, a uniform pressure is applied between the positive electrode 10 and the electrolyte layer 30, and the positive electrode 10 and the electrolyte layer 30 are sufficiently brought into close contact, so that an interfacial resistance between the positive electrode 10 and the electrolyte layer 30 may be reduced. In addition, becausease the electrolyte layer 30 is sufficiently sintered during a pressing manufacturing process of the all-solid-state secondary battery 1, an internal resistance of the electrolyte layer 30 and the all-solid-state secondary battery 1 including the same is reduced.

The inactive member 40 surrounds a side surface of the positive electrode 10 and is in contact with the electrolyte layer 30. As the inactive member 40 surrounds the side surface of the positive electrode 10 and is in contact with the electrolyte layer 30, cracking of the electrolyte layer 30, which occurs due to a pressure difference during a press process in the electrolyte layer 30 that is not in contact with the positive electrode 10, may be effectively suppressed. The inactive member 40 may surround the side surface of the positive electrode 10 and may be separated from the negative electrode 20, for example, from a first negative electrode active material layer 22. The inactive member 40 surrounds the side surface of the positive electrode 10, is in contact with the electrolyte layer 30, and is separated from the negative electrode 20. Accordingly, a possibility that a short circuit occurs due to physical contact between the positive electrode 10 and the first negative electrode active material layer 22 or that a short circuit occurs due to overcharging of lithium or the like is suppressed. For example, because the inactive member 40 is disposed on one side surface of the positive electrode active material layer 12 and, at the same time, is also disposed on one side surface of the positive electrode current collector 11, a possibility of occurrence of a short circuit due to contact between the positive electrode current collector 11 and the negative electrode 20 is more effectively suppressed.

Referring to FIGS. 6 to 7, the inactive member 40 extends from one side surface of the positive electrode 10 to an end portion of the electrolyte layer 30. As the inactive member 40 extends to the end portion of the electrolyte layer 30, cracking occurring at the end portion of the electrolyte layer 30 may be suppressed. The end portion of the electrolyte layer 30 is an outermost portion in contact with a side surface of the electrolyte layer 30. The inactive member 40 extends to the outermost portion in contact with a side surface of the electrolyte layer 30. The inactive member 40 is separated from the negative electrode 20, for example, from the first negative electrode active material layer 22. The inactive member 40 extends to the end portion of the electrolyte layer 30, but does not contact the negative electrode 20. The inactive member 40 fills, for example, a space extending from one side surface of the positive electrode 10 to the end portion of the electrolyte layer 30.

Referring to FIGS. 6 to 7, a width of the inactive member 40 extending from one side surface of the positive electrode 10 to the end portion of the electrolyte layer 30 may be, for example, 1 to 30 %, 1 to 25 %, 1 to 20 %, 1 to 15 %, 1 to 10 %, or 1 to 5 % of a width between the one side surface of the positive electrode 10 and another side surface opposite to the one side surface. If the width of the inactive member 40 is excessively large, an energy density of the all-solid-state secondary battery 1 decreases. If the width of the inactive member 40 is excessively small, an effect of disposing the inactive member 40 is insignificant.

An area of the positive electrode 10 is smaller than an area of the electrolyte layer 30 in contact with the positive electrode 10. The inactive member 40 is disposed to surround a side surface of the positive electrode 10 to compensate for an area difference between the positive electrode 10 and the electrolyte layer 30. Because the area of the inactive member 40 compensates for the difference between the area of the positive electrode 10 and the area of the electrolyte layer 30, cracking of the electrolyte layer 30 caused by a pressure difference during a pressing process is effectively suppressed. For example, a sum of the area of the positive electrode 10 and the area of the inactive member 40 may be equal to the area of the electrolyte layer 30. The electrolyte layer 30 may be, for example, a solid electrolyte layer.

The area of the positive electrode 10 may be, for example, less than 100 %, 99 % or less, 98 % or less, 97 % or less, 96 % or less, or 95 % or less of the area of the electrolyte layer 30. The area of the positive electrode 10 may be, for example, 50 % to less than 100 %, 50 % to 99 %, 55 % to 98 %, 60 % to 97 %, 70 % to 96 %, 80 % to 95 %, or 85 % to 95 % of the area of the electrolyte layer 30.

If the area of the positive electrode 10 is equal to or greater than the area of the electrolyte layer 30, the positive electrode 10 and the first negative electrode active material layer 22 physically contact each other to cause a short circuit, or the possibility of a short circuit occurring due to overcharging of lithium or the like increases. The area of the positive electrode 10 may be, for example, equal to the area of the positive electrode active material layer 12. The area of the positive electrode 10 may be, for example, equal to the area of the positive electrode current collector 11.

The area of the inactive member 40 may be, for example, 50 % or less, 40 % or less, 30 % or less, 20 % or less, or 10 % or less of the area of the positive electrode 10. The area of the inactive member 40 may be, for example, 1 % to 50 %, 5 % to 40 %, 5 % to 30 %, 5 % to 20 %, or 5 % to 15 % of the area of the positive electrode 10.

The area of the positive electrode 10 may be smaller than an area of the negative electrode current collector 21. The area of the positive electrode 10 may be, for example, less than 100 %, 99 % or less, 98 % or less, 97 % or less, 96 % or less, or 95 % or less of the area of the negative electrode current collector 21. The area of the positive electrode 10 may be, for example, 50 % to less than 100 %, 50 % to 99 %, 55 % to 98 %, 60 % to 97 %, 70 % to 96 %, 80 % to 95 %, or 85 % to 95 % of the area of the negative electrode current collector 21. The area of the negative electrode current collector 21 may be, for example, equal to the area of the negative electrode 20. The area of the negative electrode current collector 21 may be, for example, equal to the area of the first negative electrode active material layer 22.

In the present disclosure, "equal" areas, lengths, widths, thicknesses, and/or shapes include all cases having "substantially equal" areas, lengths, widths, thicknesses, and/or shapes, except for cases where the areas, lengths, widths, thicknesses, and/or shapes are intentionally made different. "Equal" areas, lengths, widths, and/or thicknesses include ranges where unintentional differences in the areas, lengths, widths, and/or thicknesses of objects being compared are, for example, less than 3 %, less than 2 %, less than 1 %, less than 0.5 %, or less than 0.1 %.

The thickness of the inactive member 40 may be, for example, greater than the thickness of the first negative electrode active material layer 22. The thickness of the first negative electrode active material layer 22 may be, for example, 50 % or less, 40 % or less, 30 % or less, 20 % or less, or 10 % or less of the thickness of the inactive member 40. The thickness of the first negative electrode active material layer 22 may be, for example, 1 % to 50 %, 1 % to 40 %, 1 % to 30 %, 1 % to 20 %, or 1 % to 10 % of the thickness of the inactive member 40.

The inactive member 40 may be a gasket. By using a gasket as the inactive member 40, cracks in the electrolyte layer 30 caused by pressure differences during the press process may be effectively suppressed.

The inactive member 40 has, for example, a single-layer structure. Alternatively, although not shown in the drawings, the inactive member 40 may have a multilayer structure. In the inactive member 40 having a multilayer structure, each layer may have a different composition. The inactive member having a multilayer structure may have, for example, a two-layer structure, a three-layer structure, a four-layer structure, or a five-layer structure. The inactive member 40 having a multilayer structure may include, for example, one or more adhesive layers and one or more support layers. The adhesive layer effectively prevents, for example, separation between the positive electrode 10 and the electrolyte layer 30 caused by the volume change of the positive electrode 10 occurring during the charging and discharging process of the all-solid-state secondary battery 1, and improves the film strength of the inactive member 40 by providing binding force between the support layer and another layer. The support layer provides supporting force to the inactive member 40, prevents non-uniformity of the pressure applied to the electrolyte layer 30 during the press process or the charging and discharging process, and prevents shape deformation of the manufactured all-solid-state secondary battery 1.

The inactive member 40 is, for example, a flame-retardant inactive member. As the flame-retardant inactive member provides flame retardancy, the possibility of thermal runaway and ignition of the all-solid-state secondary battery 1 may be prevented. As a result, the safety of the all-solid-state secondary battery 1 is further improved. As the flame-retardant inactive member absorbs residual moisture in the all-solid-state secondary battery 1, deterioration of the all-solid-state secondary battery 1 may be prevented, thereby improving the lifespan characteristics of the all-solid-state secondary battery 1.

The flame-retardant inactive member may include, for example, a matrix and a filler. The matrix may include, for example, a substrate and a reinforcing material. The matrix may include, for example, a fibrous substrate and a fibrous reinforcing material. As the matrix includes the substrate, the matrix may have elasticity. Accordingly, the matrix effectively accommodates a volume change of the all-solid-state secondary battery 1 during charging and discharging, and may be disposed at various positions. The substrate included in the matrix includes, for example, a first fibrous material. Because the substrate includes the first fibrous material, the volume change of the positive electrode 10 occurring during the charging and discharging process of the all-solid-state secondary battery 1 may be effectively accommodated, and deformation of the inactive member 40 due to the volume change of the positive electrode 10 may be effectively suppressed. The first fibrous material may be, for example, a material having an aspect ratio of 5 or more, 20 or more, or 50 or more. The first fibrous material may be, for example, a material having an aspect ratio of 5 to 1000, 20 to 1000, or 50 to 1000. The first fibrous material may be, for example, an insulating material. Because the first fibrous material is an insulating material, a short circuit between the positive electrode 30 and the negative electrode 20 caused by lithium dendrites or the like occurring during the charging and discharging process of the all-solid-state secondary battery 1 may be effectively prevented. The first fibrous material may include, for example, at least one selected from pulp fiber, insulating polymer fiber, and ion-conductive polymer fiber. As the matrix includes a reinforcing material, the strength of the matrix may be improved. Accordingly, the matrix may prevent excessive volume change during charging and discharging of the all-solid-state secondary battery 1 and prevent deformation of the all-solid secondary battery. The reinforcing material included in the matrix may include, for example, a second fibrous material. As the reinforcing material includes the second fibrous material, the strength of the matrix may be increased more uniformly. The second fibrous material may be, for example, a material having an aspect ratio of 3 or more, 5 or more, or 10 or more. The second fibrous material may be, for example, a material having an aspect ratio of 3 to 100, 5 to 100, or 10 to 100. The second fibrous material may be, for example, a flame-retardant material. As the second fibrous material is a flame-retardant material, ignition caused by thermal runaway occurring during the charging/discharging process of the all-solid-state secondary battery 1 or by an external impact may be effectively suppressed. The second fibrous material may be, for example, glass fiber, metal oxide fiber, ceramic fiber, or the like.

The flame-retardant inactive member may include a filler in addition to the matrix. The filler may be disposed inside the matrix, disposed on a surface of the matrix, or disposed both inside and on the surface. The filler may be, for example, an inorganic material. The filler included in the flame-retardant inactive member may be, for example, a moisture getter. The filler, for example, removes moisture remaining in the all-solid-state secondary battery 1 by adsorbing moisture at a temperature of less than 100 °C, thereby preventing deterioration of the all-solid-state secondary battery 1. In addition, if the temperature of the all-solid-state secondary battery 1 increases to 150 °C or more due to thermal runaway occurring during the charging/discharging process of the all-solid-state secondary battery 1 or by an external impact, the filler desorbs the adsorbed moisture, thereby effectively suppressing ignition of the all-solid-state secondary battery 1. That is, the filler may be, for example, a flame retardant. The filler may be, for example, a metal hydroxide having moisture adsorption properties. The metal hydroxide included in the filler may be, for example, Mg(OH)₂, Fe(OH)₃, Sb(OH)₃, Sn(OH)₄, TI(OH)₃, Zr(OH)₄, Al(OH)₃, or a combination thereof. The content of the filler included in the flame-retardant inactive member may be, for example, 10 to 80 parts by weight, 20 to 80 parts by weight, 30 to 80 parts by weight, 40 to 80 parts by weight, 50 to 80 parts by weight, 60 to 80 parts by weight, or 65 to 80 parts by weight, based on 100 parts by weight of the flame-retardant inactive member 40.

The flame-retardant inactive member may further include, for example, a binder. The binder may include, for example, a curable polymer or a non-curable polymer. The curable polymer may be a polymer that is cured by heat and/or pressure. The curable polymer may be, for example, solid at room temperature. The flame-retardant inactive member 40 may include, for example, a thermo-press curable film and/or a cured product thereof. The thermo-press curable polymer may be, for example, TSA-66 manufactured by Toray company.

The flame-retardant inactive member may additionally include other materials in addition to the above-described base material, reinforcing material, filler, and binder. The flame-retardant inactive member may further include, for example, at least one selected from paper, an insulating polymer, an ion-conductive polymer, an insulating inorganic material, an oxide-based solid electrolyte, and a sulfide-based solid electrolyte. The insulating polymer may be, for example, an olefin-based polymer such as polypropylene (PP) or polyethylene (PE).

A density of the base material or a density of the reinforcing material included in the flame-retardant inactive member may be, for example, 10 % to 300 %, 10 % to 150 %, 10 % to 140 %, 10 % to 130 %, or 10 % to 120 % of a density of a positive electrode active material included in the positive electrode active material layer 12.

The inactive member 40 may be a member that does not include a material having electrochemical activity, for example, an electrode active material. The electrode active material may be a material that absorbs and/or desorbs lithium. The inactive member 40 may be a member consisting of a material used in the technical field as a material other than the electrode active material.

### [All-Solid Secondary Battery]

An all-solid-state secondary battery according to an embodiment includes the above-described positive electrode; a negative electrode; and an electrolyte layer disposed between the positive electrode and the negative electrode. The negative electrode may include a negative electrode current collector and a first negative electrode active material layer disposed on one surface of the negative electrode current collector.

Referring to FIGS. 3 to 7, the all-solid-state secondary battery 1 may include a positive electrode 10; a negative electrode 20; and an electrolyte layer 30 disposed between the positive electrode 10 and the negative electrode 20. The negative electrode 20 may include the negative electrode current collector 21 and a first negative electrode active material layer 22 disposed on one surface of the negative electrode current collector.

### [Positive electrode]

Reference is made to the positive electrode described above.

### [Negative electrode]

### [Negative electrode: Negative electrode active material]

Referring to FIGS. 3 to 7, the negative electrode 20 may include a first negative electrode active material layer 22. The first negative electrode active material layer 22 may include, for example, a negative electrode active material and a binder.

The negative electrode active material included in the first negative electrode active material layer 22 may be, for example, a negative electrode material capable of forming an alloy or compound with lithium.

The negative electrode active material included in the first negative electrode active material layer 22 may have, for example, a particle form. The average particle diameter of the negative electrode active material having a particle form may be, for example, 4 µm or less, 3 µm or less, 2 µm or less, 1 µm or less, 500 nm or less, 300 nm or less, or 100 nm or less. The average particle diameter of the negative electrode active material having a particle form may be, for example, 10 nm to 4 µm, 10 nm to 3 µm, 10 nm to 2 µm, 10 nm to 1 µm, 10 nm to 500 nm, 10 nm to 300 nm, or 10 nm to 100 nm. As the negative electrode active material has an average particle diameter within these ranges, reversible absorbing and/or desorbing of lithium during charging and discharging may be further facilitated. The average particle diameter of the negative electrode active material may be, for example, a median diameter (D50) measured using a laser-type particle size distribution analyzer.

The negative electrode active material included in the first negative electrode active material layer 22 may include, for example, at least one selected from a carbon-based negative electrode active material and a metal or metalloid negative electrode active material.

The carbon-based negative electrode active material may include, for example, amorphous carbon, crystalline carbon, porous carbon, or a combination thereof.

The carbon-based negative electrode active material may be, in particular, amorphous carbon. The amorphous carbon may be, for example, carbon black (CB), acetylene black (AB), furnace black (FB), ketjen black (KB), graphene, or the like, but is not necessarily limited thereto, and any material classified as amorphous carbon in the art may be used. The amorphous carbon is carbon having no crystallinity or very low crystallinity, and is distinguished from crystalline carbon or graphite-based carbon.

The carbon-based negative electrode active material may be, for example, porous carbon. The pore volume included in the porous carbon may be, for example, 0.1 cc/g to 10.0 cc/g, 0.5 cc/g to 5 cc/g, or 0.1 cc/g to 1 cc/g. The average pore diameter included in the porous carbon may be, for example, 1 nm to 50 nm, 1 nm to 30 nm, or 1 nm to 10 nm. The BET specific surface area of the porous carbon may be, for example, 100 m²/g to 3000 m²/g.

The metal or metalloid negative electrode active material includes at least one selected from the group consisting of gold (Au), platinum (Pt), palladium (Pd), silicon (Si), silver (Ag), aluminum (Al), bismuth (Bi), tin (Sn), and zinc (Zn), but is not necessarily limited thereto, and any metal negative electrode active material or metalloid negative electrode active material that forms an alloy or compound with lithium in the art may be used. For example, nickel (Ni) is not a metal negative electrode active material because it does not form an alloy with lithium.

The first negative electrode active material layer 22 may include one type of negative electrode active material among these negative electrode active materials, or includes a mixture of a plurality of different negative electrode active materials. For example, the first negative electrode active material layer 22 may include only amorphous carbon, or includes at least one selected from the group consisting of gold (Au), platinum (Pt), palladium (Pd), silicon (Si), silver (Ag), aluminum (Al), bismuth (Bi), tin (Sn), and zinc (Zn). Alternatively, the first negative electrode active material layer 22 may include a mixture of amorphous carbon and at least one selected from the group consisting of gold (Au), platinum (Pt), palladium (Pd), silicon (Si), silver (Ag), aluminum (Al), bismuth (Bi), tin (Sn), and zinc (Zn). The mixing ratio of the mixture of amorphous carbon and gold or the like may be, as a weight ratio, for example, 99:1 to 1:99, 10:1 to 1:2, 5:1 to 1:1, or 4:1 to 2:1, but is not necessarily limited to these ranges and is selected according to the required characteristics of the all-solid-state secondary battery 1. As the negative electrode active material has such a composition, the cycle characteristics of the all-solid-state secondary battery 1 may be further improved.

The negative electrode active material included in the first negative electrode active material layer 22 may include, for example, a mixture of first particles consisting of amorphous carbon and second particles consisting of a metal or a metalloid. The metal or metalloid may include, for example, gold (Au), platinum (Pt), palladium (Pd), silicon (Si), silver (Ag), aluminum (Al), bismuth (Bi), tin (Sn), and zinc (Zn). The metalloid may alternatively be a semiconductor. A content of the second particles may be 1 to 99 wt%, 1 to 60 wt%, 8 to 60 wt%, 10 to 50 wt%, 15 to 40 wt%, or 20 to 30 wt%, based on a total weight of the mixture. As the second particles have a content within such ranges, for example, the cycle characteristics of the all-solid-state secondary battery 1 may be further improved.

Alternatively, the first negative electrode active material layer 22 may include a composite negative electrode active material. The composite negative electrode active material may include, for example, a carbon-based support and a metal-based negative electrode active material supported on the carbon-based support. As the composite negative electrode active material has such a structure, localization of the metal-based negative electrode active material in the first negative electrode active material layer may be prevented, and a uniform distribution may be obtained. As a result, the cycle characteristics of the all-solid-state secondary battery 1 including the first negative electrode active material layer 22 may be further improved.

The metal-based negative electrode active material supported on the carbon-based support may include, for example, a metal, a metal oxide, a composite of a metal and a metal oxide, or a combination thereof. The metal may include, for example, gold (Au), platinum (Pt), palladium (Pd), silicon (Si), silver (Ag), aluminum (Al), bismuth (Bi), tin (Sn), tellurium (Te), and zinc (Zn). The metal oxide may include, for example, gold (Au) oxide, platinum (Pt) oxide, palladium (Pd) oxide, silicon (Si) oxide, silver (Ag) oxide, aluminum (Al) oxide, bismuth (Bi) oxide, tin (Sn) oxide, tellurium (Te) oxide, and zinc (Zn) oxide. The metal oxide may include, for example, AuₓO_{y} (0<x≤2, 0<y≤3), PtₓO_{y} (0<x≤1, 0<y≤2), PdₓO_{y} (0<x≤1, 0<y≤1), SiₓO_{y} (0<x≤1, 0<y≤2), AgₓO_{y} (0<x≤2, 0<y≤1), AlₓO_{y} (0<x≤2, 0<y≤3), BiₓO_{y} (0<x≤2, 0<y≤3), SnₓO_{y} (0<x≤1, 0<y≤2), TeₓO_{y} (0<x≤1, 0<y≤3), ZnₓO_{y} (0<x≤1, 0<y≤1), or a combination thereof. The composite of a metal and a metal oxide may include, for example, a composite of Au and AuₓO_{y} (0<x≤2, 0<y≤3), a composite of Pt and PtₓO_{y} (0<x≤1, 0<y≤2), a composite of Pd and PdₓO_{y} (0<x≤1, 0<y≤1), a composite of Si and SiₓO_{y} (0<x≤1, 0<y≤2), a composite of Ag and AgₓO_{y} (0<x≤2, 0<y≤1), a composite of Al and AlₓO_{y} (0<x≤2, 0<y≤3), a composite of Bi and BiₓO_{y} (0<x≤2, 0<y≤3), a composite of Sn and SnₓO_{y} (0<x≤1, 0<y≤2), a composite of Te and TeₓO_{y} (0<x≤1, 0<y≤3), a composite of Zn and ZnₓO_{y} (0<x≤1, 0<y≤1), or a combination thereof.

The carbon-based support may be, for example, amorphous carbon. The amorphous carbon may be, for example, carbon black (CB), acetylene black (AB), furnace black (FB), ketjen black (KB), graphene, activated carbon, carbon nanofiber (CNF), carbon nanotube (CNT), or the like, but is not necessarily limited thereto, and any material classified as amorphous carbon in the art may be used. The amorphous carbon is carbon having no crystallinity or very low crystallinity, and is distinguished from crystalline carbon or graphite-based carbon. The carbonaceous material may be, for example, a carbon-based negative electrode active material.

The composite negative electrode active material has, for example, a particle form. The particle diameter of the composite negative electrode active material having a particle form may be, for example, 10 nm to 4 µm, 10 nm to 1 µm, 10 nm to 500 nm, 10 nm to 200 nm, or 10 nm to 100 nm. As the composite negative electrode active material has a particle diameter within these ranges, reversible absorbing and/or desorbing of lithium during charging and discharging may be further facilitated. The metal-based negative electrode active material supported on the support may have, for example, a particle form. The particle diameter of the metal-based negative electrode active material may be, for example, 1 nm to 200 nm, 1 nm to 150 nm, 5 nm to 100 nm, or 10 nm to 50 nm. The carbon-based support may have, for example, a particle form. The particle diameter of the carbon-based support may be, for example, 10 nm to 2 µm, 10 nm to 1 µm, 10 nm to 500 nm, 10 nm to 200 nm, or 10 nm to 100 nm. As the carbon-based support has a particle diameter within these ranges, it may be more uniformly disposed within the first negative electrode active material layer. The carbon-based support may be, for example, nanoparticles having a particle diameter of 500 nm or less. The particle diameter of the composite negative electrode active material, the particle diameter of the metal-based negative electrode active material, and the particle diameter of the carbon-based support may be, for example, average particle diameters. The average particle diameter is, for example, a median diameter (D50) measured using a laser-type particle size distribution analyzer. Alternatively, the average particle diameter may be, for example, automatically determined using software from an electron microscope image, or manually determined.

### [Negative Electrode: Binder]

The binder included in the first negative electrode active material layer 22 may be, for example, styrene-butadiene rubber (SBR), polytetrafluoroethylene, polyvinylidene fluoride, polyethylene, a vinylidene fluoride/hexafluoropropylene copolymer, polyacrylonitrile, polymethyl methacrylate, or the like, but is not necessarily limited thereto, and any binder used in the art may be used. The binder may consist of a single binder or a plurality of different binders.

As the first negative electrode active material layer 22 includes the binder, the first negative electrode active material layer 22 may be stabilized on the negative electrode current collector 21. In addition, cracking of the first negative electrode active material layer 22 may be suppressed despite a volume change and/or a relative position change of the first negative electrode active material layer 22 during a charging and discharging process. For example, if the first negative electrode active material layer 22 does not include the binder, the first negative electrode active material layer 22 may be easily separated from the negative electrode current collector 21. As the first negative electrode active material layer 22 is detached from the negative electrode current collector 21, in a portion where the negative electrode current collector 21 is exposed, the possibility of a short circuit occurring increases due to the negative electrode current collector 21 coming into contact with the electrolyte layer 30. The first negative electrode active material layer 22 may be fabricated, for example, by applying a slurry in which materials constituting the first negative electrode active material layer 22 are dispersed onto the negative electrode current collector 21 and drying the slurry. As the binder is included in the first negative electrode active material layer 22, stable dispersion of the negative electrode active material in the slurry is possible. For example, if the slurry is applied onto the negative electrode current collector 21 by a screen printing method, clogging of the screen (for example, clogging due to aggregates of the negative electrode active material) may be suppressed.

### [Negative Electrode: Other Additives]

The first negative electrode active material layer 22 may further include an additive used in a conventional all-solid-state secondary battery 1, for example, a filler, a coating agent, a dispersant, an ion-conductive auxiliary agent, or the like.

### [Negative Electrode: Solid Electrolyte]

The first negative electrode active material layer 22 may further include a solid electrolyte. The solid electrolyte may be, for example, a material selected from among the solid electrolytes included in the electrolyte layer 30. The solid electrolyte included in the first negative electrode active material layer 22 may serve as a reaction site at which formation of lithium metal begins within the first negative electrode active material layer 22, as a space in which the formed lithium metal is stored, or as a path for transferring lithium ions. The solid electrolyte may be omitted.

In the first negative electrode active material layer 22, the content of the solid electrolyte may be, for example, high in a region adjacent to the electrolyte layer 30 and low in a region adjacent to the negative electrode current collector 21. In the first negative electrode active material layer 22, the solid electrolyte may have, for example, a concentration gradient in which the concentration decreases from a region adjacent to the electrolyte layer 30 to a region adjacent to the negative electrode current collector 21.

### [Negative Electrode: First Negative Electrode Active Material Layer]

A ratio (B/A) of an initial charge capacity (B) of the first negative electrode active material layer 22 to an initial charge capacity (A) of the positive electrode active material layer may be 0.005 to 0.45. The initial charge capacity of the positive electrode active material layer 12 is determined by charging from a first open circuit voltage to a maximum charging voltage with respect to Li/Li⁺. The initial charge capacity of the first negative electrode active material layer 22 is determined by charging from a second open circuit voltage to 0.01 V with respect to Li/Li⁺.

The maximum charging voltage is determined according to a type of the positive electrode active material. The maximum charging voltage may be, for example, 1.5 V, 2.0 V, 2.5 V, 3.0 V, 3.5 V, 4.0 V, 4.2 V, or 4.3 V. For example, the maximum charging voltage of Li₂S or a Li₂S composite may be 2.5 V with respect to Li/Li⁺. For example, the maximum charging voltage of Li₂S or a Li₂S composite may be 3.0 V with respect to Li/Li⁺. A ratio (B/A) of an initial charge capacity (B) of the first negative electrode active material layer 22 to an initial charge capacity (A) of the positive electrode active material layer may be, for example, 0.01 to 0.45, 0.01 to 0.4, 0.01 to 0.3, 0.01 to 0.2, or 0.05 to 0.1. The initial charge capacity (mAh) of the positive electrode active material layer 12 may be obtained by multiplying a charge specific capacity (mAh/g) of the positive electrode active material by a mass (g) of the positive electrode active material in the positive electrode active material layer 12. If a plurality of types of positive electrode active materials are used, a charge specific capacity × mass value is calculated for each positive electrode active material, and a sum of these values is the initial charge capacity of the positive electrode active material layer 12. The initial charge capacity of the first negative electrode active material layer 22 is also calculated by the same method. The initial charge capacity of the first negative electrode active material layer 22 is obtained by multiplying a charge specific capacity (mAh/g) of the negative electrode active material by a mass of the negative electrode active material in the first negative electrode active material layer 22. If a plurality of types of negative electrode active materials are used, a charge specific capacity × mass value is calculated for each negative electrode active material, and a sum of these values is the initial charge capacity of the first negative electrode active material layer 22. The charge specific capacity of each of the positive electrode active material and the negative electrode active material may be measured using an all-solid-state half-cell using lithium metal as a counter electrode.

The initial charge capacity of each of the positive electrode active material layer 12 and the first negative electrode active material layer 22 may be directly measured using an all-solid-state half-cell at a constant current density, for example, 0.1 mA/cm². With respect to the positive electrode, the measurement may be performed by charging at an operating voltage from a first open circuit voltage (OCV) to a maximum charging voltage, for example, 3.0 V (vs. Li/Li⁺). With respect to the negative electrode, the measurement may be performed by charging at an operating voltage from a second open circuit voltage (OCV) to 0.01 V with respect to the negative electrode, for example, lithium metal. For example, an all-solid-state half-cell having the positive electrode active material layer may be charged from the first open circuit voltage to 3.0 V at a constant current of 0.1 mA/cm², and an all-solid-state half-cell having the first negative electrode active material layer may be charged from the second open circuit voltage to 0.01 V at a constant current of 0.1 mA/cm². A current density during constant current charging may be, for example, 0.2 mA/cm², or 0.5 mA/cm². An all-solid-state half-cell having the positive electrode active material layer may be charged, for example, from the first open circuit voltage to 2.5 V, 2.0 V, 3.5 V, or 4.0 V. A maximum charge voltage of the positive electrode active material layer may be determined by a maximum voltage of a battery that satisfies safety conditions according to JISC8712:2015 of the Japanese Standards Association.

If an initial charge capacity of the first negative electrode active material layer 22 is excessively small, a thickness of the first negative electrode active material layer 22 becomes very small, such that lithium dendrites formed between the first negative electrode active material layer 22 and the negative electrode current collector 21 during repeated charging and discharging processes collapse the first negative electrode active material layer 22, making it difficult to improve cycle characteristics of the all-solid-state secondary battery 1. If the charge capacity of the first negative electrode active material layer 22 is excessively increased, an energy density of the all-solid-state secondary battery 1 decreases and an internal resistance of the all-solid-state secondary battery 1 due to the first negative electrode active material layer 22 increases, making it difficult to improve cycle characteristics of the all-solid-state secondary battery 1.

The thickness of the first negative electrode active material layer 22 may be, for example, 50 % or less, 40 % or less, 30 % or less, 20 % or less, 10 % or less, or 5 % or less of a thickness of the positive electrode active material layer 12. The thickness of the first negative electrode active material layer 22 may be, for example, 1 % to 50 %, 1 % to 40 %, 1 % to 30 %, 1 % to 20 %, 1 % to 10 %, or 1 % to 5 % of the thickness of the positive electrode active material layer 12. The thickness of the first negative electrode active material layer 22 may be, for example, 1 µm to 20 µm, 2 µm to 15 µm, or 3 µm to 10 µm. If the thickness of the first negative electrode active material layer 22 is excessively thin, lithium dendrites formed between the first negative electrode active material layer 22 and the negative electrode current collector 21 collapse the first negative electrode active material layer 22, making it difficult to improve cycle characteristics of the all-solid-state secondary battery 1. If the thickness of the first negative electrode active material layer 22 is excessively increased, the energy density of the all-solid-state secondary battery 1 decreases and the internal resistance of the all-solid-state secondary battery 1 due to the first negative electrode active material layer 22 increases, making it difficult to improve cycle characteristics of the all-solid-state secondary battery 1. If the thickness of the first negative electrode active material layer 22 decreases, the initial charge capacity of the first negative electrode active material layer 22 also decreases, for example.

### [Negative Electrode: Second Negative Electrode Active Material Layer]

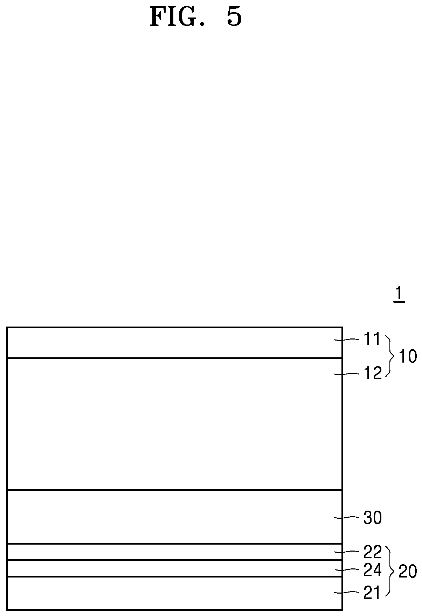

Referring to FIG. 5, the all-solid-state secondary battery 1 may further include a second negative electrode active material layer 24 disposed, for example, between the negative electrode current collector 21 and the first negative electrode active material layer 22 after being charged. The second negative electrode active material layer 24 may be a metal layer including lithium or a lithium alloy. The metal layer may include lithium or a lithium alloy. Therefore, because the second negative electrode active material layer 24 is a metal layer including lithium, it serves, for example, as a lithium reservoir. The lithium alloy may be, for example, a Li-Al alloy, a Li-Sn alloy, a Li-In alloy, a Li-Ag alloy, a Li-Au alloy, a Li-Zn alloy, a Li-Ge alloy, a Li-Si alloy, or the like, but is not limited thereto, and any material used as a lithium alloy in the art may be used. The second negative electrode active material layer 24 may consist of one of these alloys or of lithium, or may consist of several types of alloys. The second negative electrode active material layer 24 is, for example, a plated layer. The second negative electrode active material layer 24 may be plated, for example, between the first negative electrode active material layer 22 and the negative electrode current collector 21 during a charging process of the all-solid-state secondary battery 1.

The thickness of the second negative electrode active material layer 24 is not particularly limited, but may be, for example, 1 µm to 500 µm, 1 µm to 200 µm, 1 µm to 150 µm, 1 µm to 100 µm, or 1 µm to 50 µm. If the thickness of the second negative electrode active material layer 24 is too small, it is difficult for the second negative electrode active material layer 24 to perform the role of a lithium reservoir. If the thickness of the second negative electrode active material layer 24 is too large, the mass and volume of the all-solid-state secondary battery 1 increase, and there is a possibility that the cycle characteristics of the all-solid-state secondary battery 1 may rather deteriorate.

Alternatively, in the all-solid-state secondary battery 1, the second negative electrode active material layer 24 may be disposed, for example, between the negative electrode current collector 21 and the first negative electrode active material layer 22 before assembly of the all-solid-state secondary battery 1. If the second negative electrode active material layer 24 is disposed between the negative electrode current collector 21 and the first negative electrode active material layer 22 before assembly of the all-solid-state secondary battery 1, the second negative electrode active material layer 24 acts as a lithium reservoir because the second negative electrode active material layer 24 is a metal layer including lithium. For example, a lithium foil may be disposed between the negative electrode current collector 21 and the first negative electrode active material layer 22 before assembly of the all-solid-state secondary battery 1.

If the second negative electrode active material layer 24 is plated by charging after assembly of the all-solid-state secondary battery 1, the energy density of the all-solid-state secondary battery 1 increases because the second negative electrode active material layer 24 is not included at the time of assembly of the all-solid-state secondary battery 1. During charging of the all-solid-state secondary battery 1, charging may be performed in excess of the charge capacity of the first negative electrode active material layer 22. That is, the first negative electrode active material layer 22 is overcharged. At the initial stage of charging, lithium is absorbed into the first negative electrode active material layer 22. The negative electrode active material included in the first negative electrode active material layer 22 may form an alloy or a compound with lithium ions that have migrated from the positive electrode 10. If charging is performed in excess of the capacity of the first negative electrode active material layer 22, lithium is plated, for example, on the back surface of the first negative electrode active material layer 22, that is, between the negative electrode current collector 21 and the first negative electrode active material layer 22, and a metal layer corresponding to the second negative electrode active material layer 24 is formed by the plated lithium. The second negative electrode active material layer 24 is a metal layer mainly consisting of lithium (i.e., metallic lithium). Such a result is obtained, for example, if the negative electrode active material included in the first negative electrode active material layer 22 includes a material that forms an alloy or a compound with lithium. During discharge, lithium in the first negative electrode active material layer 22 and the second negative electrode active material layer 24, that is, the metal layer, is ionized and moves toward the positive electrode 10. Accordingly, it is possible to use lithium as a negative electrode active material in the all-solid-state secondary battery 1. In addition, because the first negative electrode active material layer 22 covers the second negative electrode active material layer 24, the first negative electrode active material layer 22 serves as a protective layer for the second negative electrode active material layer 24, that is, the metal layer, while simultaneously serving to suppress the precipitation and growth of lithium dendrites. Accordingly, a short circuit and capacity reduction of the all-solid-state secondary battery 1 are suppressed, thereby improving cycle characteristics of the all-solid-state secondary battery 1. In addition, if the second negative electrode active material layer 24 is disposed by charging after the assembly of the all-solid-state secondary battery 1, the negative electrode 20, that is, the negative electrode current collector 21, the first negative electrode active material layer 22, and a region therebetween, is a Li-free region that does not contain lithium (Li) in an initial state or a fully discharged state of the all-solid-state secondary battery 1.

### [Negative Electrode: Negative Electrode Current Collector]

The negative electrode current collector 21 is composed of, for example, a material that does not react with lithium, that is, a material that forms neither an alloy nor a compound. The material constituting the negative electrode current collector 21 may be, for example, copper (Cu), stainless steel, titanium (Ti), iron (Fe), cobalt (Co), or nickel (Ni), but is not necessarily limited thereto, and any material used as an electrode current collector in the technical field may be used. The negative electrode current collector 21 may include one of the above-described metals, or may include an alloy or a coating material of two or more metals. The negative electrode current collector 21 may be, for example, in the form of a plate or a foil.

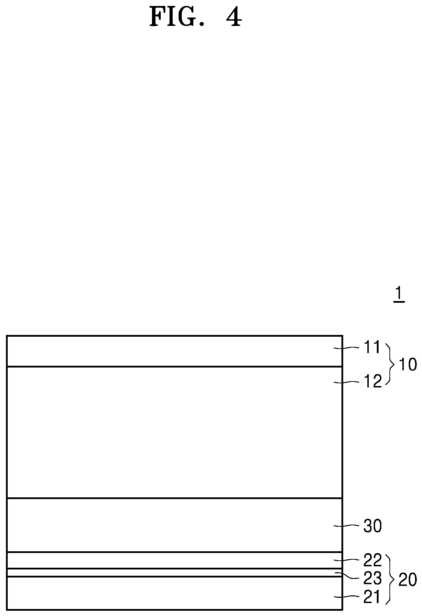

Referring to FIG. 4, the all-solid-state secondary battery 1 may further include a thin film 23 including an element capable of forming an alloy with lithium on one surface of the negative electrode current collector 21. The thin film 23 may be disposed between the negative electrode current collector 21 and the first negative electrode active material layer 22. The thin film 23 may include, for example, an element capable of forming an alloy with lithium. The element capable of forming an alloy with lithium may be, for example, gold, silver, zinc, tin, indium, silicon, aluminum, or bismuth, but is not necessarily limited thereto, and any element capable of forming an alloy with lithium in the technical field may be used. The thin film 23 may include one of these metals, or may include an alloy of several kinds of metals. By disposing the thin film 23 on one surface of the negative electrode current collector 21, for example, the plating morphology of the second negative electrode active material layer 24 plated between the thin film 23 and the first negative electrode active material layer 22 may be further flattened, and the cycle characteristics of the all-solid-state secondary battery 1 may be further improved.

The thickness of the thin film 23 may be, for example, 1 nm to 800 nm, 10 nm to 700 nm, 50 nm to 600 nm, or 100 nm to 500 nm. If the thickness of the thin film 23 is less than 1 nm, the function provided by the thin film 23 may be difficult to exhibit. If the thickness of the thin film 23 is excessively large, the thin film 23 itself absorbs lithium, thereby reducing the plating amount of lithium at the negative electrode, so that the energy density of the all-solid-state battery is lowered, and the cycle characteristics of the all-solid-state secondary battery 1 may be deteriorated. The thin film 23 may be disposed on the negative electrode current collector 21 by, for example, a vacuum deposition method, a sputtering method, a plating method, or the like, but is not necessarily limited to these methods, and any method capable of forming the thin film 23 in the technical field may be used.

Although not shown in the drawings, the negative electrode current collector 21 may include, for example, a base film and a metal layer disposed on one surface or opposite surfaces of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or a combination thereof. The polymer may be an insulating polymer. Because the base film includes an insulating thermoplastic polymer, a rapid increase in current resulting from softening or liquefaction of the base film to interrupt the battery operation upon occurrence of a short circuit may be suppressed. The metal layer may include, for example, copper (Cu), stainless steel, titanium (Ti), iron (Fe), cobalt (Co), nickel (Ni), or an alloy thereof. The negative electrode current collector 21 may further include a metal chip and/or a lead tab. For more specific details regarding the base film, the metal layer, the metal chip, and the lead tab of the negative electrode current collector 21, reference is made to the positive electrode current collector 11 described above. As the negative electrode current collector 21 has such a structure, the weight of the negative electrode may be reduced, and as a result, the energy density of the negative electrode and an all-solid-state secondary battery may be improved.

### [Electrolyte Layer]

### [Electrolyte Layer: Electrolyte]

Referring to FIGS. 3 to 7, the electrolyte layer 30 may include an electrolyte disposed between the positive electrode 10 and the negative electrode 20. The electrolyte may include, for example, a solid electrolyte, a gel electrolyte, or a combination thereof.

The solid electrolyte may include, for example, a sulfide-based solid electrolyte, an oxide-based solid electrolyte, a polymer solid electrolyte, or a combination thereof.

The solid electrolyte may be, for example, a sulfide-based solid electrolyte. The sulfide-based solid electrolyte may be, for example, at least one selected from Li₂S-P₂S₅; Li₂S-P₂S₅-LiX, where X is a halogen element; Li₂S-P₂S₅-Li₂O; Li₂S-P₂S₅-Li₂O-LiI; Li₂S-SiS₂; Li₂S-SiS₂-LiI; Li₂S-SiS₂-LiBr; Li₂S-SiS₂-LiCl; Li₂S-SiS₂-B₂S₃-LiI; Li₂S-SiS₂-P₂S₅-LiI; Li₂S-B₂S₃; Li₂S-P₂S₅-ZₘSₙ, where m and n are positive numbers and Z is one of Ge, Zn, or Ga; Li₂S-GeS₂; Li₂S-SiS₂-Li₃PO₄; Li₂S-SiS₂-LiₚMO_{q}, where p and q are positive numbers and M is one of P, Si, Ge, B, Al, Ga, or In; Li₇₋ₓPS₆₋ₓClₓ where 0≤x≤2; Li₇₋ₓPS₆₋ₓBrₓ where 0≤x≤2; and Li₇₋ₓPS₆₋ₓIₓ where 0≤x≤2. The sulfide-based solid electrolyte may be produced, for example, by processing starting materials such as Li₂S and P₂S₅ by a melt quenching method, a mechanical milling method, or the like. In addition, after such treatment, a heat treatment may be performed. The solid electrolyte may be in an amorphous state, a crystalline state, or a mixed state thereof. In addition, the solid electrolyte may include, for example, sulfur (S), phosphorus (P), and lithium (Li) as at least constituent elements among the above-described sulfide-based solid electrolyte materials. For example, the solid electrolyte may be a material including Li₂S-P₂S₅. If a material including Li₂S-P₂S₅ is used as the sulfide-based solid electrolyte material forming the solid electrolyte, a mixing molar ratio of Li₂S and P₂S₅ may be, for example, in a range of about Li₂S : P₂S₅ = 20 : 80 to 90 : 10, 25 : 75 to 90 : 10, 30 : 70 to 70: 30, or 40: 60 to 60: 40.

The sulfide-based solid electrolyte may include, for example, an argyrodite-type solid electrolyte represented by Formula A below:

<Formula A> Li⁺₁₂₋ₙ₋ₓAⁿ⁺X²⁻₆₋ₓY⁻ₓ

In the formula, A is P, As, Ge, Ga, Sb, Si, Sn, Al, In, Ti, V, Nb, or Ta, X is S, Se, or Te, Y is Cl, Br, I, F, CN, OCN, SCN, or N₃, 1≤n≤5, and 0≤x≤2. The sulfide-based solid electrolyte may be, for example, an argyrodite-type compound including at least one selected from Li₇₋ₓPS₆₋ₓClₓ where 0≤x≤2, Li₇₋ₓPS₆₋ₓBrₓ where 0≤x≤2, and Li₇₋ₓPS₆₋ₓIₓ where 0≤x≤2. The sulfide-based solid electrolyte may be, for example, an argyrodite-type compound including at least one selected from Li₆PS₅Cl, Li₆PS₅Br, and Li₆PS₅I.

A density of the argyrodite-type solid electrolyte may be 1.5 to 2.0 g/cc. As the argyrodite-type solid electrolyte has a density of 1.5 g/cc or more, internal resistance of the all-solid-state secondary battery is reduced, and penetration of the electrolyte layer by Li may be effectively suppressed.

The oxide-based solid electrolyte may be, for example, Li_{1+x+y}AlₓTi₂₋ₓSi_{y}P_{3-y}O₁₂ (0<x<2, 0≤y<3), BaTiO₃, Pb(Zr,Ti)O₃(PZT), Pb₁₋ₓLaₓZr_{1-y} Ti_{y}O₃(PLZT)(0≤x<1, 0≤y<1), PB(Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃(0<x<2, 0<y<3), LiₓAl_{y}Ti_{z}(PO₄)₃ (0<x<2, 0<y<1, 0<z<3), Li_{1+x+y}(Al, Ga)ₓ(Ti, Ge)₂₋ₓSi_{y}P_{3-y}O₁₂(0≤x≤1 0≤y≤1), LiₓLa_{y}TiO₃ (0<x<2, 0<y<3), Li₂O, LiOH, Li₂CO₃, LiAlO₂, Li₂O-Al₂O₃-SiO₂-P₂O₅-TiO₂-GeO₂, Li₃₊ₓLa₃M₂O₁₂(M = Te, Nb, or Zr and 0≤x≤10), or a combination thereof. The oxide-based solid electrolyte is manufactured, for example, by a sintering method or the like.

The oxide-based solid electrolyte is, for example, a garnet-type solid electrolyte selected from Li₇La₃Zr₂O₁₂(LLZO) and Li₃₊ₓLa₃Zr₂₋ₐMₐO₁₂(M doped LLZO, M=Ga, W, Nb, Ta, or Al, 0<a<2, and 0≤x≤10).

The polymer solid electrolyte may be selected from, for example, polymer solid electrolytes used in the composite positive electrode active material.

The gel electrolyte may be, for example, a polymer gel electrolyte. The gel electrolyte may have a gel state, for example, without including a polymer.

The polymer gel electrolyte may be selected from, for example, polymer gel electrolytes used in the composite positive electrode active material.

### [Electrolyte Layer: Binder]

The electrolyte layer 30 may include, for example, a binder. The binder included in the electrolyte layer 30 may be, for example, styrene-butadiene rubber (SBR), polytetrafluoroethylene, polyvinylidene fluoride, polyethylene, or the like, but is not limited thereto, and any binder used in the art may be used. The binder of the electrolyte layer 30 may be the same as or different from the binder included in the positive electrode active material layer 12 and the first negative electrode active material layer 22. The binder may be omitted.

A content of the binder included in the electrolyte layer 30 may be 0.1 to 10 wt%, 0.1 to 5 wt%, 0.1 to 3 wt%, 0.1 to 1 wt%, 0 to 0.5 wt%, or 0 to 0.1 wt%, based on a total weight of the electrolyte layer 30.

As used herein, the term "alkyl" refers to a fully saturated branched or unbranched (or straight-chain or linear) hydrocarbon.

Non-limiting examples of the "alkyl" include methyl, ethyl, n-propyl, isopropyl, n-butyl, isobutyl, sec-butyl, n-pentyl, isopentyl, neopentyl, n-hexyl, 3-methylhexyl, 2,2-dimethylpentyl, 2,3-dimethylpentyl, n-heptyl, and the like.

At least one hydrogen atom in the "alkyl" may be substituted with a halogen atom, a C1-C20 alkyl group substituted with a halogen atom (e.g., CCF₃, CHCF₂, CH₂CH₃, CH₂F, CCl₃, etc.), a C1-C20 alkoxy, a C2-C20 alkoxyalkyl, a hydroxy group, a nitro group, a cyano group, an amino group, an amidino group, a hydrazine, a hydrazone, a carboxyl group or a salt thereof, a sulfonyl group, a sulfamoyl group, a sulfonic acid group or a salt thereof, a phosphoric acid or a salt thereof, or a C1-C20 alkyl group, a C2-C20 alkenyl group, a C2-C20 alkynyl group, a C1-C20 heteroalkyl group, a C6-C20 aryl group, a C6-C20 arylalkyl group, a C6-C20 heteroaryl group, a C7-C20 heteroarylalkyl group, a C6-C20 heteroaryloxy group, a C6-C20 heteroaryloxyalkyl group, or a C6-C20 heteroarylalkyl group.

As used herein, "cycloalkyl" refers to an alkyl group forming a ring.

As used herein, the term "halogen" includes fluorine, bromine, chlorine, and iodine.

As used herein, the term "alkenyl" refers to a branched or unbranched hydrocarbon having at least one carbon-carbon double bond. Non-limiting examples of an alkenyl group include vinyl, allyl, butenyl, propenyl, isobutenyl, and the like, and one or more hydrogen atoms in the alkenyl may be substituted with the same substituents as in the case of the alkyl group described above.

As used herein, the term "alkynyl" refers to a branched or unbranched hydrocarbon having at least one carbon-carbon triple bond. Non-limiting examples of "alkynyl" include ethynyl, butynyl, isobutynyl, isopropynyl, and the like.

One or more hydrogen atoms in the "alkynyl" may be substituted with the same substituents as in the case of the alkyl group described above.

As used herein, the term "aryl" also includes a group in which an aromatic ring is optionally fused to one or more carbon rings. Non-limiting examples of "aryl" include phenyl, naphthyl, tetrahydronaphthyl, and the like. In addition, one or more hydrogen atoms in the "aryl" group may be substituted with the same substituents as in the case of the alkyl group described above.

As used herein, the term "heteroaryl" refers to a monocyclic or bicyclic organic group that includes one or more heteroatoms selected from N, O, P, or S, with the remaining ring atoms being carbon. The heteroaryl group includes, for example, 1 to 5 heteroatoms and includes 5 to 10 ring members. S or N may be oxidized to have various oxidation states.

Examples of heteroaryl include thienyl, furyl, pyrrolyl, imidazolyl, pyrazolyl, thiazolyl, isothiazolyl, 1,2,3-oxadiazolyl, 1,2,4-oxadiazolyl, 1,2,5-oxadiazolyl, 1,3,4-oxadiazolyl, 1,2,3-thiadiazolyl, 1,2,4-thiadiazolyl, 1,2,5-thiadiazolyl, 1,3,4-thiadiazolyl, isothiazol-3-yl, isothiazol-4-yl, isothiazol-5-yl, oxazol-2-yl, oxazol-4-yl, oxazol-5-yl, isoxazol-3-yl, isoxazol-4-yl, isoxazol-5-yl, 1,2,4-triazol-3-yl, 1,2,4-triazol-5-yl, 1,2,3-triazol-4-yl, 1,2,3-triazol-5-yl, tetrazolyl, pyrid-2-yl, pyrid-3-yl, 2-pyrazin-2-yl, pyrazin-4-yl, pyrazin-5-yl, 2-pyrimidin-2-yl, 4-pyrimidin-2-yl, or 5-pyrimidin-2-yl, and the like.

"Heteroaryl" includes the case where a heteroaromatic ring is optionally fused to one or more aryl, cycloaliphatic, or heterocyclic rings.

### [Modes for Carrying Out the Invention]

The inventive concept is described in more detail through the following Examples and Comparative Examples. However, the Examples are intended to illustrate the present inventive concept, and the scope of the present inventive concept is not limited thereto.

### (Preparation of Composite)

### Preparation Example 1: Li₂S-LiI-CNF Composite

Li₂S and LiI were mixed at a weight ratio of 30:20. The mixture was mechanically milled using a ball mill to prepare a Li₂S-LiI composite. The milling conditions were 25 °C and 600 rpm for 10 hours.

The Li₂S-LiI composite and carbon nanofibers (CNF) were mixed at a weight ratio of 50:10. The mixture was mechanically milled using a ball mill to prepare a Li₂S-LiI-CNF composite. The milling conditions were 25 °C and 600 rpm for 10 hours.

The Li₂S-LiI-CNF composite was used as a composite positive electrode active material.

### Preparation Example 2: Li₂S-LiCl-CNF Composite

A Li₂S-LiCl composite was prepared in the same manner as in Preparation Example 1, except that LiCl was used instead of LiI.

The Li₂S-LiCl-CNF composite was used as a composite positive electrode active material.

### (Preparation of Composite Positive Electrode Active Material)

### Example 1: Li₂S-LiI-CNF/Organic Filler (Polymer) Composite, 3 wt% Organic Filler

Polyethylene oxide (Mw = 600,000 Dalton) and LiTFSI were added to acetonitrile and mixed for at least 12 hours, and then the solvent was removed to prepare a polymer organic filler. A molar ratio of the polyethylene oxide to the LiTFSI was 1:20. The composite prepared in Preparation Example 1 and the polymer organic filler were mixed at a weight ratio of 97:3 to prepare a mixture. The mixture was mechanically milled using a ball mill to prepare a composite positive electrode active material. Milling conditions were 25 °C and 200 rpm for 1 hour. The polymer organic filler corresponds to a solid polymer electrolyte.

The composite positive electrode active material had a core/shell structure in which a shell including an organic filler was disposed on a composite core. A structure of the composite positive electrode active material was confirmed from a scanning electron microscope image of a cross section of the composite positive electrode active material.

### Example 2: Li₂S-LiI-CNF/Organic Filler (Polymer) Composite, 5 wt% Organic Filler

A composite positive electrode active material was prepared in the same manner as in Example 1, except that a mixture obtained by mixing the composite prepared in Preparation Example 1 and the polymer organic filler at a weight ratio of 95:5 was used.

### Example 3: Li₂S-LiI-CNF/Organic Filler (Polymer) Composite, 10 wt% Organic Filler

A composite positive electrode active material was prepared in the same manner as in Example 1, except that a mixture obtained by mixing the composite prepared in Preparation Example 1 and the polymer organic filler at a weight ratio of 90:10 was used.

### Example 4: Li₂S-LiI-CNF/Organic Filler (Polymer) Composite, 15 wt% Organic Filler

A composite positive electrode active material was prepared in the same manner as in Example 1, except that a mixture obtained by mixing the composite prepared in Preparation Example 1 and the polymer organic filler at a weight ratio of 85:15 was used.

### Example 5: Li₂S-LiI-CNF/Organic Filler (Polymer) Composite, 20 wt% Organic Filler

A composite positive electrode active material was prepared in the same manner as in Example 1, except that a mixture obtained by mixing the composite prepared in Preparation Example 1 and the polymer organic filler at a weight ratio of 80:20 was used.

### Example 6: Li₂S-LiCl-CNF/Organic Filler (Polymer) Composite, 10 wt% Organic Filler

A composite positive electrode active material was prepared in the same manner as in Example 1, except that a mixture obtained by mixing the composite prepared in Preparation Example 2 and the polymer organic filler at a weight ratio of 90:10 was used.

### Example 7: Li₂S-LiI-CNF/Organic Filler (P-Containing Compound) Composite, 10 wt% Organic Filler

Tris(2,2,2-trifluoroethyl)phosphate and LiTFSI were added to acetonitrile and mixed for at least 12 hours, and then the solvent was removed to prepare a P-containing compound organic filler. A molar ratio of the P-containing compound to LiTFSI was 1:20. The P-containing compound organic filler corresponds to a P-containing compound electrolyte.

The composite prepared in Preparation Example 1 and the P-containing compound organic filler were mixed at a weight ratio of 90:10 to prepare a mixture. The mixture was mechanically milled using a ball mill to prepare a composite positive electrode active material. The milling conditions were 25 °C and 200 rpm for 1 hour.

The composite positive electrode active material had a core/shell structure in which a shell including the P-containing compound organic filler was disposed on a composite core. The structure of the composite positive electrode active material was confirmed from a scanning electron microscope image of a cross-section of the composite positive electrode active material.

### Reference Example 1

A mixture prepared by mixing the composite prepared in Preparation Example 1 with polyethylene oxide (Me = 600,000 Dalton) and LiTFSI was used as is as a composite positive electrode active material.

A molar ratio of the polyethylene oxide to LiTFSI was 1:20. The composite prepared in Preparation Example 1 was mixed with a 1:20 molar ratio mixture of polyethylene oxide and LiTFSI in a weight ratio of 97:3.

### Comparative Example 1: Li₂S-LiI-CNF alone

The composite prepared in Preparation Example 1 was used as is as a composite positive electrode active material.

### (Manufacture of Positive Electrode and Secondary Battery)

### Example 8

### (Manufacture of Positive Electrode)

The composite positive electrode active material prepared in Example 1 was prepared as a positive electrode active material. As a solid electrolyte, Li₆PS₅Cl, which is an argyrodite-type crystal (D50 = 1 µm, crystalline), was prepared. PTFE was prepared as a binder. These materials were mixed in a weight ratio of composite positive electrode active material: solid electrolyte: binder = 60 : 39 : 1 to prepare a positive electrode mixture. The positive electrode mixture was obtained by dry mixing using a ball mill.

The positive electrode mixture was disposed on one surface of a positive electrode current collector consisting of aluminum foil coated with carbon on one surface, and plate-pressed for 10 minutes at a pressure of 200 MPa to manufacture a positive electrode. The thickness of the positive electrode was about 120 µm. The thickness of the positive electrode active material layer was about 100 µm, and the thickness of the carbon-coated aluminum foil was about 20 µm. The areas of the positive electrode active material layer and the positive electrode current collector were the same.

### (Preparation of negative electrode)

A SUS foil having a thickness of 10 µm was prepared as a negative electrode current collector. Carbon black (CB) having a primary particle diameter of about 30 nm and silver (Ag) particles having an average particle diameter of about 60 nm were prepared as a negative electrode active material.

4 g of a mixed powder obtained by mixing carbon black (CB) and silver (Ag) particles at a weight ratio of 3:1 was placed in a container, and 4 g of an NMP solution containing 7 wt% of a PVDF binder (# 9300 from Kureha) was added thereto to prepare a mixed solution. A slurry was prepared by stirring the mixed solution while adding NMP little by little to the prepared mixed solution. The prepared slurry was applied onto a SUS sheet using a bar coater, dried in air at 80 °C for 10 minutes, and then vacuum-dried at 40 °C for 10 hours to prepare a laminate. The prepared laminate was cold-roll-pressed to planarize the surface thereof, thereby preparing a negative electrode having a first negative electrode active material layer/negative electrode current collector structure. The thickness of the first negative electrode active material layer was about 15 µm. The areas of the first negative electrode active material layer and the negative electrode current collector were the same.

### (Preparation of Solid Electrolyte Layer)

A mixture was prepared by adding 1.5 parts by weight of an acrylic binder, based on 98.5 parts by weight of a solid electrolyte, to a Li₆PS₅Cl solid electrolyte (D50=3.0 µm, crystalline), which is an argyrodite-type crystal. A slurry was prepared by stirring the prepared mixture while adding octyl acetate thereto. The prepared slurry was applied onto a 15 µm-thick nonwoven fabric placed on a 75 µm-thick PET substrate using a bar coater, and dried in air at a temperature of 80 °C for 10 minutes to prepare a laminate. The prepared laminate was vacuum-dried at 80 °C for 2 hours to prepare a solid electrolyte layer.

### (Inactive Member)

A flame-retardant inactive member was prepared by forming a slurry, in which cellulose fiber, glass fiber, aluminum hydroxide (Al(OH)₃), an acrylic binder, and a solvent were mixed, into a gasket shape, and then removing the solvent.

The weight ratio of the cellulose fiber, the glass fiber, the aluminum hydroxide (Al(OH)₃), and the acrylic binder was 20:8:70:2. The thickness of the inactive member was 120 µm.

Before disposing the prepared flame-retardant inactive member on the solid electrolyte layer, vacuum heat treatment was performed at 80 °C for 5 hours to remove moisture and the like from the flame-retardant inactive member.

### (Manufacture of All-Solid-State Secondary Battery)

Referring to FIG. 4, the solid electrolyte layer was disposed on the negative electrode such that a first negative electrode active material layer was in contact with the solid electrolyte layer, and a positive electrode was disposed on the solid electrolyte layer. A laminate was prepared by disposing a gasket surrounding the positive electrode and in contact with the solid electrolyte layer around the positive electrode. The thickness of the gasket was about 120 µm. The flame-retardant inactive member was used as the gasket. The gasket was disposed to be in contact with a side surface of the positive electrode and the solid electrolyte layer. The positive electrode was disposed at a central portion of the solid electrolyte layer, and the gasket was disposed to surround the positive electrode and to extend to an end portion of the solid electrolyte layer. An area of the positive electrode was about 90 % of an area of the solid electrolyte layer, and the gasket was disposed over an entire remaining 10 % area of the solid electrolyte layer where the positive electrode was not disposed.

The prepared stack was subjected to a plate press treatment at 85 °C under a pressure of 500 MPa for 30 min. By such a press treatment, the solid electrolyte layer is sintered, and battery characteristics are improved. A thickness of the sintered solid electrolyte layer was about 45 µm. A density of a Li₆PS₅Cl solid electrolyte, which is an argyrodite-type crystal included in the sintered solid electrolyte layer, was 1.6 g/cc. An area of the solid electrolyte layer was the same as an area of the negative electrode.

The pressed stack was placed in a pouch and vacuum-sealed to manufacture an all-solid secondary battery. A portion of the positive electrode current collector and a portion of the negative electrode current collector were extended to an outside of the sealed battery to be used as a positive electrode terminal and a negative electrode terminal.

### Examples 9 to 14

Positive electrodes and all-solid-state secondary batteries were manufactured in the same manner as in Example 8, except that the composite positive electrode active materials prepared in Examples 2 to 7 were respectively used.

### Reference Example 2

A positive electrode and an all-solid-state secondary battery were manufactured in the same manner as in Example 8, except that the composite positive electrode active material prepared in Reference Example 1 was used.

### Comparative Example 2

A positive electrode and an all-solid-state secondary battery were manufactured in the same manner as in Example 8, except that the composite positive electrode active material prepared in Comparative Example 1 was used.

### Evaluation Example 1: XRD Analysis and Scanning Electron Microscopy Analysis

XRD spectra were measured using Cu Kα radiation for the bare Li₂S used in Preparation Example 1, the pulverized Li₂S, the Li₂S-LiI composite prepared in the first step of Preparation Example 1, and the Li₂S-LiI-CNF composite prepared in Preparation Example 1.

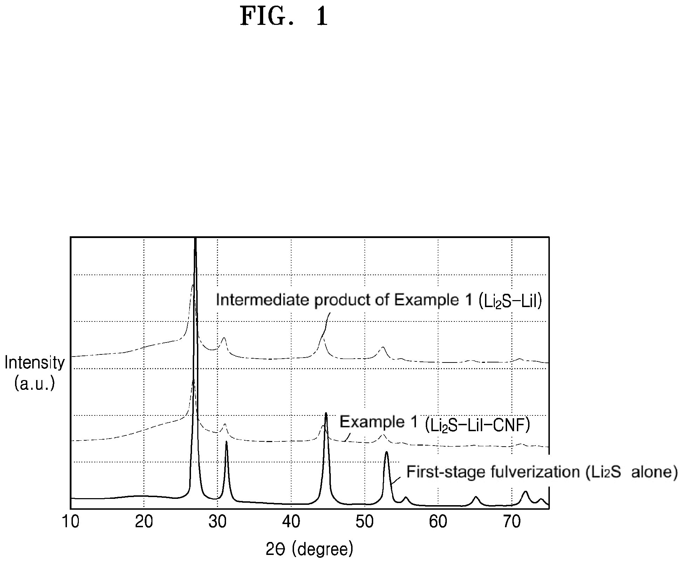

Some of the measurement results are shown in Table 1 and FIG. 1 below. A Li₂S crystallite size and a lattice constant were derived from a first peak for a (111) crystal plane appearing at a diffraction angle 2θ = 27° ± 2.0° in the XRD spectrum.

The pulverized Li₂S was prepared by milling under the same conditions as in the first step of Preparation Example 1, except that the 30:20 weight ratio mixture of Li₂S and LiI was changed to 50 parts by weight of Li₂S.

For the bare Li₂S used in Preparation Example 1, the pulverized Li₂S, and the Li₂S-LiI-CNF composite prepared in Preparation Example 1, a particle size (a D50 particle diameter and a D10 particle diameter) of the composite was measured using a laser-based particle size analyzer (PSA).

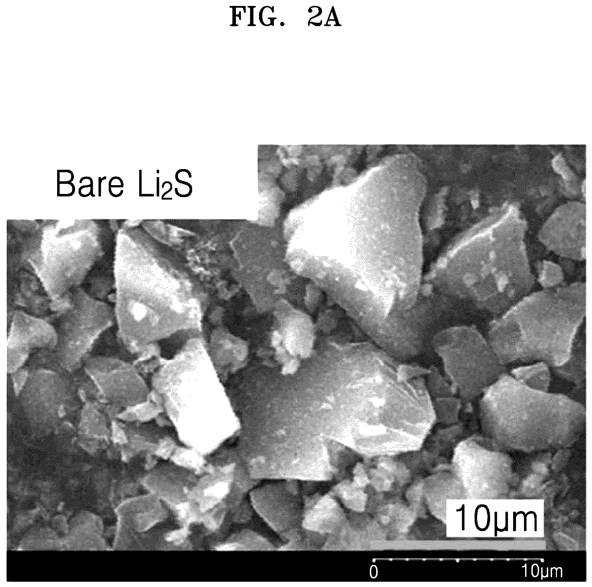

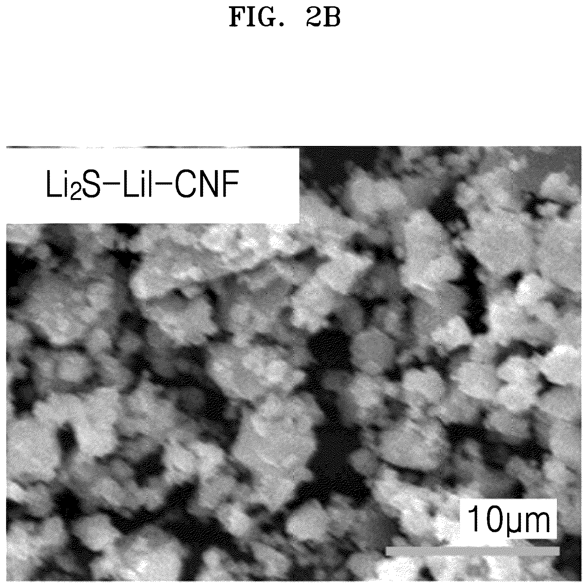

Scanning electron microscope images of the bare Li₂S used in Example 1 and the Li₂S-LiI-CNF composite prepared in Example 1 are shown in FIG. 2A and FIG. 2B, respectively.

A Li₂S particle size of the composite was measured using a scanning electron microscope. The measurement results are shown in Table 1 below.

**[Table 1]**

| | Li₂S crystallite size [nm] | Li₂S particle size [µm] |
|---|---|---|
| bare Li₂S | 65 | 8 |
| Pulverized Li₂S | 15 | - |
| Li₂S-LiI-CNF composite | Less than 10 | Less than 1 |

As shown in Table 1, the Li₂S particle size and crystallite size of the Li₂S-LiI-CNF composite were significantly reduced compared to bare Li₂S. Although not shown in Table 1, the lattice constant of the Li₂S-LiI-CNF composite of Preparation Example 1 was larger than the lattice constant of bare Li₂S. The increase in the lattice constant of the Li₂S-LiI composite compared to the lattice constant of bare Li₂S was determined to be due to the dissolution of LiI within the Li₂S crystals. Accordingly, it was confirmed that the Li₂S-LiI composite forms a solid solution in the Li₂S-LiI-CNF composite.

The composite prepared in Preparation Example 1 had a D50 particle size of about 5 µm and a D10 particle size of about 1 µm or more.

### Evaluation Example 2: Thermal Stability Evaluation

For the composite positive electrode active material of Comparative Example 1, ignition occurred during the sieving process of the prepared composite positive electrode active material powder in air at 25 °C and 1 atm. The carbon-based material of the composite positive electrode active material was oxidized and reacted with oxygen in the air, resulting in ignition.

In contrast, in the composite positive electrode active materials of Examples 1 to 7, no ignition occurred during the sieving process of the prepared composite positive electrode active material powder in air at 25 °C and 1 atm. Thermal stability of the composite positive electrode active material was increased by coating the carbon-based material of the composite in the composite positive electrode active material with the organic filler. As a result, ignition of the composite positive electrode active material was suppressed.

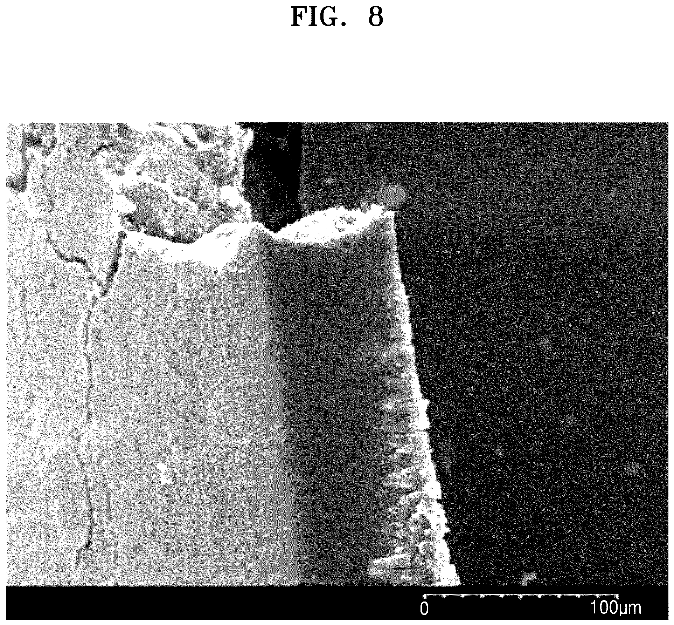

FIG. 8 is a scanning electron microscope image of a side surface of a pellet prepared by pressing the composite positive electrode active material of Example 3 under isostatic pressure.

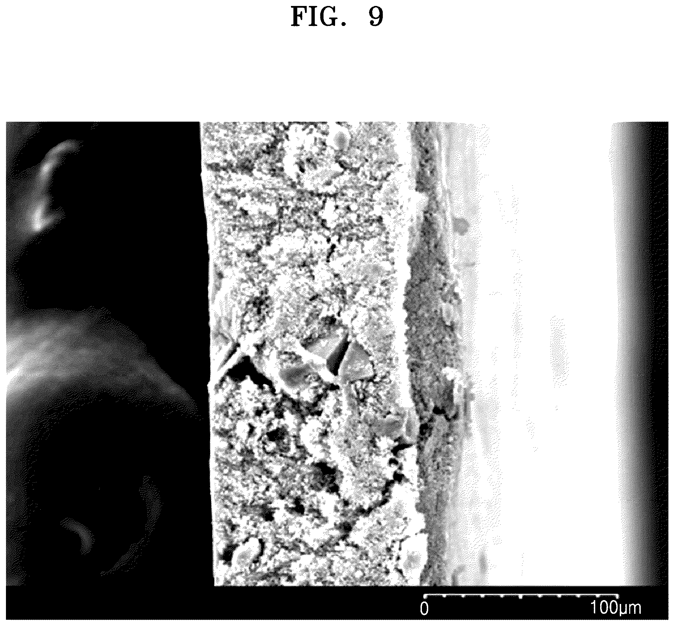

FIG. 9 is a scanning electron microscope image of a side surface of a pellet prepared by pressing the composite positive electrode active material of Comparative Example 1 under isostatic pressure.

As shown in FIG. 8, the side surface of the pellet prepared using the composite positive electrode active material of Example 3 was flat and smooth. The pellet prepared from the composite positive electrode active material of Example 3 did not ignite even when exposed to air at 25 °C and 1 atm for 72 hours.

As shown in FIG. 9, the side surface of the pellet prepared using the composite positive electrode active material of Comparative Example 1 included a plurality of protrusions and depressions and was rough. The pellet prepared from the composite positive electrode active material of Comparative Example 1 ignited when exposed to air at 25 °C and 1 atm for 72 hours.

It was determined that the composite positive electrode active material of Example 3 had improved thermal stability, i.e., oxidation resistance, compared to the composite positive electrode active material of Comparative Example 1.

### Evaluation Example 3: Evaluation of moisture stability

The composite positive electrode active materials prepared in Examples 1 to 7 and Comparative Example 1 were pressed under isostatic pressure to prepare pellets.

Ionic conductivity was measured for each of the prepared pellet, the pellet left in air for 24 hours after preparation, and the pellet left in air for 72 hours after preparation.

After a separator layer impregnated with a liquid electrolyte (1M LiTFSI in propylene carbonate (PC)) was disposed on opposite surfaces of the pellet, lithium foil was disposed on the separator layer to complete an electron blocking cell.

The ionic conductivity was measured using a DC polarization method at 45 °C and 1 atm. After applying a DC voltage of 50 mV to a symmetric cell and 1 hour later, when the change in current per minute decreased to 1 µA/g or less, the steady-state current was measured.

The ionic resistance of the composite positive electrode active material was calculated from the measured current and the volume of the pellet, and the ionic conductivity was calculated therefrom. Some of the obtained ionic conductivity are shown in Table 2 below.

**[Table 2]**

| | Prepared pellet [mS/cm] | Pellet left for 24 hours after preparation [mS/cm] | Pellet left for 72 hours after preparation [mS/cm] |
|---|---|---|---|
| Example 2 (Organic filler 5 wt%) | 0.072 | 0.060 | 0.049 |
| Example 3 (organic filler 10 wt%) | 0.084 | 0.074 | 0.062 |
| Example 4 (organic filler 15 wt%) | 0.045 | 0.041 | 0.036 |
| Comparative Example 1 (Organic filler 0 wt%) | 0.052 | 0.036 | 0.021 |

As shown in Table 2, the ionic conductivity of the composite positive electrode active materials of Examples 2 to 4 after being left in air for 72 hours was 68 % or more of the ionic conductivity before being left. In contrast, the ionic conductivity of the composite positive electrode active material of Comparative Example 1 after being left in air for 72 hours was about 40 % of the ionic conductivity before being left.

This was determined to be because, in the composite positive electrode active materials of Examples 2 to 4, the organic filler disposed on the core surface blocked the contact between the core and moisture, thereby effectively suppressing the deterioration of the composite positive electrode active material due to moisture, that is, the decrease in ionic conductivity.

### Evaluation Example 4: Charge-Discharge Test

The charge-discharge characteristics of the all-solid-state secondary batteries prepared in Examples 8 to 14, Reference Example 2, and Comparative Example 2, which employed the composite positive electrode active materials prepared in Examples 1 to 7, Reference Example 1, and Comparative Example 1, were evaluated by the following charge-discharge test.

The charge-discharge test was performed by placing the all-solid-state secondary battery in a thermostatic chamber at 45 °C.

In the first cycle, the battery was charged at a constant current of 0.05 C for 20 hours until the battery voltage reached 2.5 V to 2.8 V. Subsequently, the battery was discharged at a constant current of 0.05 C for 20 hours until the battery voltage reached 0.3 V.

The discharge capacity of the first cycle was taken as the standard capacity. The standard capacity is expressed as the specific capacity of Li2S in Table 3 below.

From the second cycle onward, charging and discharging were performed under the same conditions as the first cycle for up to 30 cycles. The measurement results are shown in Table 3 below. The initial efficiency is expressed by Equation 1 below, and the capacity retention rate is expressed by Equation 2 below. <Equation 1> 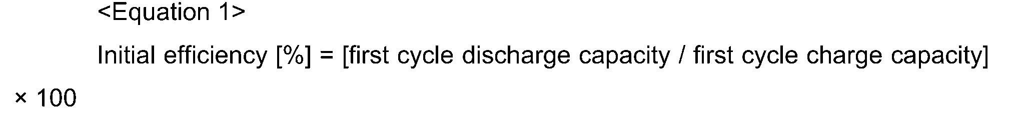 Initial efficiency [%] = [first cycle discharge capacity / first cycle charge capacity] × 100 <Equation 2> 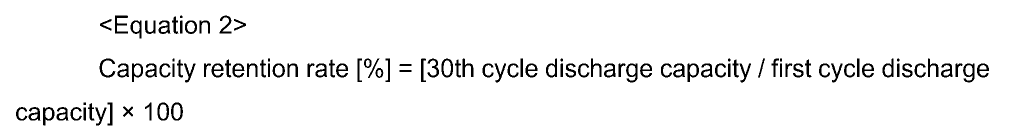 Capacity retention rate [%] = [30th cycle discharge capacity / first cycle discharge capacity] × 100

**[Table 3]**

| | Specific capacity [mAh/g] | Initial efficienc y [%] | Capacity retention rate [%] |
|---|---|---|---|
| Example 8: Li₂S-LiI-CNF/organic filler (polymer) composite, organic filler 3 wt% | 500 | 75 | 60 |
| Example 9: Li₂S-LiI-CNF/organic filler (polymer) composite, organic filler 5 wt% | 650 | 78 | 80 |
| Example 10: Li₂S-LiI-CNF/organic filler (polymer) composite, organic filler 10 wt% | 900 | 86 | 200 |
| Example 11: Li₂S-LiI-CNF/organic filler (polymer) composite, organic filler 15 wt% | 820 | 81 | 180 |
| Example 12: Li₂S-LiI-CNF/organic filler (polymer) composite, organic filler 20 wt% | 800 | 78 | 150 |
| Example 13: Li2S-LiCl-CNF/organic filler (polymer) composite, organic filler 10 wt% | 810 | 82 | 150 |
| Example 14: Li₂S-LiI-CNF/organic filler (P-containing compound) composite, organic filler 10 wt% | 880 | 86 | 200 |
| Reference Example 2: Li₂S-LiI-CNF, simple mixture of polymer and lithium salt, polymer + lithium salt mixture 3 wt% | 300 | 69 | 10 |
| Comparative Example 2: Li₂S-LiI-CNF core alone, organic filler 0 wt% | 800 | 78 | 30 |

As shown in Table 3, the all-solid-state secondary batteries of Examples 8 to 14 including the composite positive electrode active materials of Examples 1 to 7 exhibited improved discharge capacity, initial efficiency, and lifespan characteristics compared to the all-solid-state secondary batteries of Reference Example 2 and Comparative Example 2 including the composite positive electrode active materials of Reference Example 1 and Comparative Example 1. The composite positive electrode active material of Comparative Example 1 exhibited deteriorated charge/discharge characteristics compared to the composite positive electrode active materials of Examples 1 to 7 due to a decrease in thermal stability and moisture stability, and a side reaction with the sulfide-based solid electrolyte during the charge/discharge process.

The composite positive electrode active material of Reference Example 1, being a simple mixture, exhibited deteriorated charge/discharge characteristics compared to the composite positive electrode active materials of Examples 1 to 7 because the organic filler was not effectively coated on the core.

Although not shown in the drawings, it was confirmed that, in the all-solid-state secondary batteries of Examples 8 to 14, a second negative electrode active material layer, which is a lithium metal layer, was formed between the first negative electrode active material layer and the negative electrode current collector after initial charging. This was confirmed through a cross-sectional scanning electron microscope image of the all-solid-state secondary battery.

### Description of Reference Numerals

| | | | |
|---|---|---|---|
| 1 | All-solid-state secondary battery | 10 | Positive electrode |
| 11 | Positive electrode current collector material layer | 12 | Positive electrode active |
| 20 | Negative electrode | 21 | Negative electrode current collector |
| 22 | First negative electrode active material layer | 23 | Thin film |
| 24 | Second negative electrode active material layer | 30 | Electrolyte layer |
| 40 | Inactive member | | |

### Industrial Applicability

According to one aspect, by including an organic filler, it is possible to provide a composite positive electrode active material having improved thermal stability and moisture stability.

According to another aspect, by including a composite positive electrode active material having improved thermal stability and moisture stability, it is possible to provide an all-solid-state secondary battery that provides improved capacity and initial efficiency.

## Claims

1. A composite positive electrode active material comprising: a core; and a
shell disposed on at least a portion of the core, wherein the core comprises a composite of Li₂S, a first ionic compound, and a first carbon-based material, the shell comprises an organic filler, and the organic filler comprises: a second ionic compound; and a polymer, a phosphorus (P)-containing compound, or a combination thereof.

2. The composite positive electrode active material of claim 1, wherein the
composite of Li₂S, the first ionic compound, and the first carbon-based material comprises a composite represented by Li₂S-LiₐX_{b}-C (1≤a≤5, 1≤b≤5), a composite represented by Li₂S-M1ₐX_{b}-C (1≤a≤5, 1≤b≤5), a composite represented by Li₂S-M1ₐS_{b}-C (1≤a≤5, 1≤b≤5), or a combination thereof,
M1 is Mg, Ca, Sr, Ba, Al, Ga, In, V, Nb, Sc, Fe, Ru, Os, or a combination thereof, and X is I, Br, Cl, F, H, O, Se, Te, N, P, As, Sb, Al, B, OCl, PF₆, BF₄, SbF₆, AsF₆, ClO₄, AlO₂, AlCl₄, NO₃, CO₃, BH₄, SO₄, BO₃, PO₄, NCl, NCl₂, BN₂, or a combination thereof.

3. The composite positive electrode active material of claim 1, wherein the
first ionic compound comprises a first lithium salt, a first metal salt, a first metal sulfide, or a combination thereof, the first lithium salt is a binary compound or a ternary compound,
the binary compound comprises LiI, LiBr, LiCl, LiF, LiH, Li₂O, Li₂Se, Li₂Te, Li₃N, Li₃P, Li₃As, Li₃Sb, Li₃Al₂, LiB₃, or a combination thereof,
the ternary compound comprises Li₃OCl, LiPF₆, LiBF₄, LiSbF₆, LiAsF₆, LiClO₄, LiAlO₂, LiAlCl₄, LiNO₃, Li₂CO₃, LiBH₄, Li₂SO₄, Li₃BO₃, Li₃PO₄, Li₄NCl, Li₅NCl₂, Li₃BN₂, or a combination thereof,
the first metal salt comprises AlF₃, AlCl₃, AlBr₃, CaF₂, CaCl₂, CaBr₂, or a combination thereof, and
the first metal sulfide comprises FeS, MgS, CaS, Al₂S₃, V₂S_{3,} FeS₂, VS₂, MnS, NiS, CuS, or a combination thereof.

4. The composite positive electrode active material of claim 1, wherein the
composite of Li₂S, the first ionic compound, and the first carbon-based material comprises a solid solution of Li₂S and the first ionic compound, and
a size of a Li₂S crystallite obtained from an X-ray diffraction (XRD) spectrum of the composite of Li₂S, the first ionic compound, and the first carbon-based material is 20 nm or less.

5. The composite positive electrode active material of claim 1, wherein, in
the composite of Li₂S, the first ionic compound, and the first carbon-based material, a molar ratio of Li₂S to the first ionic compound is 50:50 to 95:5,
the composite comprises 10 to 80 parts by weight of Li₂S, 1 to 40 parts by weight of the first ionic compound, and 1 to 20 parts by weight of the first carbon-based material, based on 100 parts by weight of the composite of Li₂S, the first ionic compound, and the first carbon-based material,
a size of the composite of Li₂S, the first ionic compound, and the first carbon-based material is 1 to 20 µm, and
a D10 particle diameter of the composite of Li₂S, the first ionic compound, and the first carbon-based material is 1 µm or more.

6. The composite positive electrode active material of claim 1, wherein the
first carbon-based material comprises amorphous carbon, crystalline carbon, or a combination thereof,
the first carbon-based material comprises a carbon nanostructure, the carbon nanostructure comprises a carbon nanofiber, a carbon nanotube, a carbon nanobelt, a carbon nanorod, graphene, or a combination thereof,
the first carbon-based material comprises a fibrous carbon-based material, a particulate carbon-based material, or a combination thereof, and
the particulate carbon-based material comprises carbon black, Ketjen black, acetylene black, Denka black, thermal black, channel black, graphite, activated carbon, or a combination thereof.

7. The composite positive electrode active material of claim 1, wherein the
second ionic compound comprises a second lithium salt, an ionic liquid, or a combination thereof, and
the polymer comprises polyethylene oxide (PEO), polyvinylidene fluoride (PVDF), vinylidene fluoride-hexafluoropropylene (PVDF-HFP), poly(styrene-b-ethylene oxide) block copolymer (PS-PEO), poly(styrenebutadiene), poly(styrene-isoprene-styrene), poly(styrene-b-divinylbenzene) block copolymer, poly(styrene-ethylene oxide-styrene) block copolymer, polystyrene sulfonate (PSS), polyvinyl fluoride (PVF), poly(methyl methacrylate) (PMMA), polyethylene glycol (PEG), polyacrylonitrile (PAN), polytetrafluoroethylene (PTFE), polyethylenedioxythiophene (PEDOT), polypyrrole (PPY), polyacrylonitrile (PAN), polyaniline, polyacetylene, Nafion, Aquivion, Flemion, Gore, Aciplex, Morgane ADP, sulfonated poly(ether ether ketone) (SPEEK), sulfonated poly(arylene ether ketone ketone sulfone) (SPAEKKS), sulfonated poly(aryl ether ketone) (SPAEK), poly[bis(benzimidazobenzisoquinolinones)] (SPBIBI), poly(styrene sulfonate) (PSS), lithium 9,10-diphenylanthracene-2-sulfonate (DPASLi⁺), or a combination thereof.

8. The composite positive electrode active material of claim 1, wherein the
P-containing compound comprises a phosphate-based compound, a phosphite-based compound, or a combination thereof,
the phosphate-based compound is represented by Formula 1 below, and
the phosphite-based compound is represented by Formula 2 below: 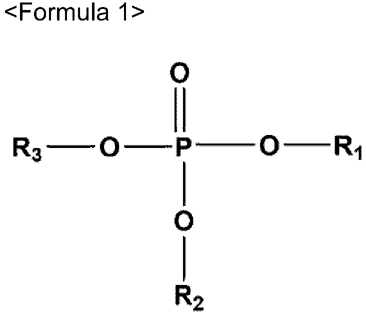
wherein, in the formula, R₁, R₂, and R₃ are each independently: a hydrogen atom; a fluorine atom; a C1-C5 alkyl group unsubstituted or substituted with halogen; a C4-C10 cycloalkyl group unsubstituted or substituted with halogen; a C5-C10 aryl group unsubstituted or substituted with halogen; a C2-C10 heteroaryl group unsubstituted or substituted with halogen; or a C2-C10 alkenyl group unsubstituted or substituted with halogen,
the phosphite-based compound is represented by Formula 2 below: 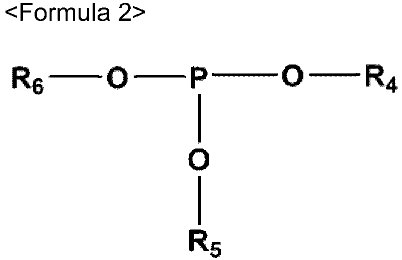
wherein, in the formula, R₄, R₅, and R₆ are each independently: a hydrogen atom; a fluorine atom; a C1-C5 alkyl group unsubstituted or substituted with halogen; a C4-C10 cycloalkyl group unsubstituted or substituted with halogen; a C5-C10 aryl group unsubstituted or substituted with halogen; a C2-C10 heteroaryl group unsubstituted or substituted with halogen; or a C2-C10 alkenyl group unsubstituted or substituted with halogen.

9. The composite positive electrode active material of claim 8, wherein the phosphate-based compound comprises trimethyl phosphate, triethyl phosphate, triphenyl phosphate, tris(2,2,2-trifluoroethyl)phosphate, or a combination thereof, the phosphite-based compound comprises trimethyl phosphite, triethyl phosphite, triphenyl phosphite, tris(2,2,2-trifluoroethyl)phosphite, or a combination thereof, and the organic filler is free of an organic solvent.

10. The composite positive electrode active material of claim 1, wherein the
organic filler further comprises a polymer electrolyte, an electrolyte comprising the P-containing compound, or a combination thereof, the polymer electrolyte comprises a polymer solid electrolyte, a polymer gel electrolyte, or a combination thereof,
a content of the organic filler is 1 to 20 wt% of a total weight of the composite positive electrode active material, and
a thickness of the shell is 2 µm or less.

11. The composite positive electrode active material of claim 1, wherein an
ionic conductivity of the composite positive electrode active material after 72 hours in air at 25 °C and 1 atm is 0.03 mS/cm or more, and the composite positive electrode active material does not ignite during sieving in air at 25 °C and 1 atm.

12. A positive electrode comprising: a positive electrode current collector; and
a positive electrode active material layer disposed on one surface or opposite surfaces of the positive electrode current collector, wherein the positive electrode active material layer comprises the composite positive electrode active material according to any one of claims 1 to 11 and a solid electrolyte.

13. The positive electrode of claim 12, wherein the positive electrode active
material layer further comprises a second carbon-based material, the second carbon-based material comprises a fibrous carbon-based material,
the fibrous carbon-based material comprises a fibrous carbon nanostructure, and the fibrous carbon nanostructure comprises a carbon nanofiber, a carbon nanotube, a carbon nanobelt, a carbon nanorod, or a combination thereof.

14. An all-solid-state secondary battery comprising: the positive electrode
according to claim 12; a negative electrode; and an electrolyte layer disposed between the positive electrode and the negative electrode, wherein the negative electrode comprises a negative electrode current collector and a first negative electrode active material layer disposed on one surface of the negative electrode current collector.

15. The all-solid-state secondary battery of claim 14, wherein the first negative
electrode active material layer comprises a negative electrode active material and a binder, the negative electrode active material has a particle form, and an average particle diameter of the negative electrode active material is 4 µm or less.

16. The all-solid-state secondary battery of claim 15, wherein the negative
electrode active material comprises at least one selected from a carbon-based negative electrode active material and a metal-based negative electrode active material alloyable with lithium,
the carbon-based negative electrode active material comprises amorphous carbon, crystalline carbon, porous carbon, or a combination thereof, and
the metal-based negative electrode active material comprises gold (Au), platinum (Pt), palladium (Pd), silicon (Si), silver (Ag), aluminum (Al), bismuth (Bi), tin (Sn), zinc (Zn), or a combination thereof.

17. The all-solid-state secondary battery of claim 15, wherein the negative electrode active material comprises a mixture of first particles consisting of amorphous carbon and second particles consisting of a metal or a metalloid, and a content of the second particles is 1 to 60 wt% based on a total weight of the mixture.

18. The all-solid-state secondary battery of claim 14, further comprising a
second negative electrode active material layer, wherein the second negative electrode active material layer is disposed in at least one of between the negative electrode current collector and the first negative electrode active material layer and between the negative electrode current collector and the electrolyte layer, the second negative electrode active material layer is a metal layer, and the metal layer comprises lithium or a lithium alloy.

19. The all-solid-state secondary battery of claim 14, wherein the electrolyte
layer comprises a solid electrolyte, a gel electrolyte, or a combination thereof, the solid electrolyte comprises a sulfide-based solid electrolyte, an oxide-based solid electrolyte, a polymer solid electrolyte, or a combination thereof, the gel electrolyte comprises a polymer gel electrolyte,
the sulfide-based solid electrolyte is at least one selected from Li₂S-P₂S₅, Li₂S-P₂S₅-LiX where X is a halogen element,
Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ where m and n are positive numbers and Z is one of Ge, Zn, or Ga,
Li₂S-GeS₂, Li₂S-SiS₂-Li₃PO₄, Li₂S-SiS₂-LiₚMO_{q} where p and q are positive numbers and M is one of P, Si, Ge, B, Al, Ga, or In;
Li₇₋ₓPS₆₋ₓClₓ, 0≤x≤2, Li₇₋ₓPS₆₋ₓBrₓ where 0≤x≤2, and Li₇₋ₓPS₆₋ₓIₓ where 0≤x≤2,
the sulfide-based solid electrolyte comprises an argyrodite-type solid electrolyte,
the argyrodite-type solid electrolyte comprises at least one selected from Li₆PS₅Cl, Li₆PS₅Br, and Li₆PS₅I, and a density of the argyrodite-type solid electrolyte is 1.5 to 2.0 g/cc.

20. The all-solid-state secondary battery of claim 14, wherein the positive
electrode comprises the positive electrode current collector,
at least one of the positive electrode current collector and the negative electrode current collector comprises a base film and a metal layer disposed on one surface or opposite surfaces of the base film,
the base film comprises a polymer, the polymer comprises polyethylene terephthalate (PET), polyethylene (PE), polypropylene (PP), polybutylene terephthalate (PBT), polyimide (PI), or a combination thereof, the metal layer comprises indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and
the all-solid-state secondary battery further comprises an inactive member disposed on one side surface of the positive electrode.
